# EUROPÄISCHE PATENTSCHRIFT

(11) **EP 2 934 891 B1**
(45) Veröffentlichungstag und Bekanntmachung des Hinweises auf die Patenterteilung: **25.10.2017**
(21) Anmeldenummer: 13811433.5
(22) Anmeldetag: 17.12.2013
(51) Int. Cl.: B32B 37/00, B32B 38/10, B32B 37/12

(54) **VERFAHREN ZUM HERSTELLEN EINES SICHERHEITSMERKMALS FÜR EIN WERT- UND/ODER SICHERHEITSPRODUKT UND WERT- UND/ODER SICHERHEITSPRODUKT**
METHOD FOR PRODUCING A SECURITY FEATURE FOR A VALUE PRODUCT AND/OR SECURITY PRODUCT AND A VALUE PRODUCT AND/OR SECURITY PRODUCT
PROCÉDÉ DE FABRICATION D'UNE CARACTÉRISTIQUE DE SÉCURITÉ POUR UN PRODUIT DE VALEUR ET/OU UN PRODUIT DE SÉCURITÉ ET PRODUIT DE VALEUR ET/OU DE SÉCURITÉ

(30) Priorität: 19.12.2012 DE 102012223700
(43) Veröffentlichungstag der Anmeldung: 28.10.2015
(73) Patentinhaber: Bundesdruckerei GmbH, 10969 Berlin (DE)
(72) Erfinder: KULIKOVSKA, Olga, 14165 Berlin (DE); GATTNER, Mario, 10969 Berlin (DE); MATHEA, Arthur, 14199 Berlin (DE); TRÖLENBERG, Stefan, 15749 Mittenwalde OT Ragow (DE); DRESSEL, Olaf, 14641 Wustermark (DE); SPRINGMANN, Edward, 10249 Berlin (DE); PEINZE, Franziska, 12589 Berlin (DE)
(74) Vertreter: Bressel, Burkhard
(86) Internationale Anmeldenummer: PCT/EP2013/076808
(87) Internationale Veröffentlichungsnummer: WO 2014/095789

(56) Entgegenhaltungen:
- DE-A1-102005 062 396
- US-A1- 2004 084 139
- US-B1- 6 544 369

## Beschreibung

Die vorliegende Erfindung betrifft ein Verfahren zum Herstellen eines Sicherheitsmerkmals für ein Wert- und/oder Sicherheitsprodukt sowie das Wert- und/oder Sicherheitsprodukt, beispielsweise ein Wert- und/oder Sicherheitsdokument oder ein Sicherheitselement. Ein Wert- und/oder Sicherheitsdokument kann beispielsweise ein Personaldokument, insbesondere ein Personalausweis, oder ein Zahlungsmittel, insbesondere eine Banknote, sein. Derartige Dokumente werden typischerweise in normierten Formaten hergestellt, beispielsweise im ID 1-, ID 2- oder ID 3-Format gemäß ISO 7810. Die Dokumente können grundsätzlich aus einem organischen Polymer oder einem Keramikwerkstoff, Papier, Pappe, Glas oder aus Metall bestehen oder dieses enthalten. Karten und kartenförmige Bestandteile von buchartigen Dokumenten können vorzugsweise aus miteinander laminierten Polymerfolien hergestellt sein. Zur Prüfung der Echtheit und/oder zur Kodierung von Information weisen diese Produkte Sicherheitsmerkmale auf.

Die in den Wert- und/oder Sicherheitsprodukten eingesetzten Sicherheitsmerkmale können ausschließlich dazu dienen, die Echtheit der Produkte unabhängig von ihrer Art oder von ihrem Benutzer nachzuweisen. Derartige Sicherheitsmerkmale sind beispielsweise Guillochen, Wasserzeichen, Prägedrucke, Kippbilder, Hologramme, das Spezialpapier von Banknoten und dergleichen. Individualisierende, beispielsweise personalisierende, Sicherheitsmerkmale enthalten darüber hinaus in kodierter Form oder auch in Klarschrift eine Information über die Art des Dokuments, über dessen Inhaber und/oder über einen Gegenstand, dem das Dokument zugeordnet ist. Derartige Informationen können ein Gesichtsbild/Portrait (beispielsweise in Form einer Photographie) des Inhabers, seine persönlichen Daten, wie der Name, Geburtstag, Geburtsort, die Unterschrift, eine persönliche Kennung, wie eine Mitgliedsnummer, oder biometrische Daten des Inhabers sein, beispielsweise Fingerabdrücke, Iris- und Retinaerkennung. Ein anderes das Dokument individualisierendes Sicherheitsmerkmal kann beispielsweise eine Seriennummer des Dokuments oder die Fahrgestellnummer eines Kraftfahrzeuges sein, dem das Dokument zugeordnet ist.

In DE 10 2009 020 753 A1 ist eine Druckveredelungsmaschine angegeben, die ein Bogenfördersystem zur Förderung von Bogen aus Flachmaterial sowie mindestens eine entlang einer Bogenförderstrecke angeordnete Arbeitsstation zur Durchführung eines Bearbeitungsschrittes eines Druckveredelungsverfahrens aufweist. Das Druckveredelungsverfahren kann beispielsweise ein Prägefoliendruckverfahren mittels Heißprägen, Kaltfolientransfer, Reliefprägung, Folienkaschierung oder Lackierung von Printprodukten sein. Beispielsweise können auch Sicherheitsapplikationen angebracht werden, beispielsweise Hologramme und andere Kopierschutzelemente auf Wertpapieren, Geldscheinen oder anderen Druckerzeugnissen. Das Kaltprägen ist ein zweistufiger Druckveredelungsprozess, bei dem in einer ersten Stufe auf die Oberfläche des Bedruckstoffes eine Haftschicht für die Transferschicht einer Prägefolie aufgebracht wird und in einer zweiten Stufe die Prägefolie an den Stellen aufgenommen wird, an denen in der ersten Stufe der Klebstoff übertragen wurde. In Verbindung mit Lackiermodulen können auch Veredelungsmodule benutzt werden, die eine Trocknung der aufgebrachten Lackschicht mittels Ultraviolettstrahlen erlauben.

In DE 692 07 751 T2 ist ein Druckverfahren beschrieben, bei dem der zu bedruckende Gegenstand mit einem kalt zu übertragenden Klebstoff an den Stellen beschichtet wird, die einem gewünschten Druckmotiv entsprechen. Anschließend wird ein von einem Druckmaterial getragener Überzugsfilm kalt und unter Druck übertragen. Der Überzugsfilm kann durch eine dünne Beschichtungsschicht, insbesondere aus Metall, wie Gold, Silber oder Aluminium, gebildet sein.

In DE 10 2004 063 189 A1 ist ferner eine Beschichtungseinrichtung für die Kaltfolienprägung beschrieben. Zur Übertragung einer bildmäßigen Beschichtung von einer Trägerfolie auf einen Druckbogen wird ein bildmäßiger Kleberauftrag auf den Druckbogen aufgebracht. In einem Beschichtungswerk wird dann die Trägerfolie mit der bildmäßigen Beschichtung unter Anpressdruck an dem Druckbogen vorbeigeführt, sodass die Beschichtung an den Klebestellen haftet und ein Bild entsteht. Um die Glanzwirkung beispielsweise einer aufzubringenden Metallisierungsschicht zu verbessern, wird angegeben, einen auf ultraviolette Strahlung reagierenden Kleber aufzubringen. Diese UV-Unterdruckfarbe wird mit einem Auftragswerk für den Kleber über eine Offsetplatte aufgebracht, und im Anschluss daran wird eine UV-Trocknung vorgesehen.

In US 6,544,369 B1 ist ein Verfahren zum Herstellen einer dekorativen Oberfläche auf einem Substrat offenbart, das die folgenden Verfahrensschritte umfasst: Bereitstellen eines auf das Substrat zu übertragenden Basistransferbogens aus einer Basisharzfolie und einer Basistransferschicht, beispielsweise einer Metallschicht, Aufkleben des Basistransferbogens auf eine Oberfläche des Substrats mittels einer Kleberschicht und Entfernen der Basisharzfolie. Die Kleberschicht kann in Form eines zweidimensionalen Musters ausgebildet sein, sodass die Basisharzfolie in den Bereichen, in denen sich keine Kleberschicht befindet, zusammen mit der Metallschicht entfernt wird. Die Metallschicht kann eine glatte glänzende Oberfläche, eine matte Oberfläche, eine Oberfläche mit einem Haarmuster, eine geprägte Oberfläche oder eine Oberfläche mit einem Hologrammmuster aufweisen.

Insbesondere für die Herstellung von individualisierenden Sicherheitsmerkmalen sind die vorstehenden Verfahren und Vorrichtungen nicht geeignet. Da es erforderlich ist, Wert- und/oder Sicherheitsprodukte gegen Fälschung und/oder Verfälschung und/oder Kopie so sicher wie möglich auszugestalten, besteht jedoch ein dringender Bedarf, herkömmliche Sicherheitsmerkmale zu individualisieren, insbesondere solche Sicherheitsmerkmale, die durch auf ein Dokument aufgebrachte Sicherheitselemente gebildet werden. Von daher besteht eine der der vorliegenden Erfindung zugrunde liegenden Aufgaben darin, ein Sicherheitsmerkmal zu finden, das mindestens eine Eigenschaft des Wert- und/oder Sicherheitsproduktes und/oder eine Eigenschaft einer dem Produkt zugeordneten Person oder eines dem Produkt zugeordneten Gegenstandes kodiert. Der vorliegenden Erfindung liegt darüber hinaus die wesentliche weitere Aufgabe zugrunde, ein kostengünstig, einfach und schnell realisierbares Sicherheitsmerkmal zu schaffen. Mit dem Sicherheitsmerkmal soll somit das Sicherheitsniveau gegenüber herkömmlichen Wert- und/oder Sicherheitsdokumenten oder Sicherheitselementen erhöht werden. Eine weitere der vorliegenden Erfindung zugrunde liegende Anforderung besteht darin, individualisierende Strukturen zu bilden, die sehr präzise und reproduzierbar erzeugt sind.

Soweit in der Beschreibung und in den Ansprüchen der vorliegenden Anmeldung der Begriff 'Wert- und/oder Sicherheitsprodukt', das insbesondere ein Wert- und/oder Sicherheitsdokument oder ein Sicherheitselement sein kann, verwendet wird, ist darunter beispielsweise ein Reisepass, Personalausweis, Führerschein, ein Zugangskontrollausweis oder eine andere ID-Karte, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton oder ein anderes Dokument zu verstehen. Ein erfindungsgemäßes Produkt kann auch ein Sicherheitselement, beispielsweise ein Aufkleber, Haftetikett (beispielsweise zur Produktsicherung) oder dergleichen, sein, das das erfindungsgemäße Sicherheitsmerkmal aufweist und das mit einem Vorprodukt eines Wert- und/oder Sicherheitsdokuments oder eines anderen Artikels, beispielsweise mit einem zu markierenden Produkt, dessen Echtheit zu garantieren ist, unlösbar verbunden werden kann, um das Wert- und/oder Sicherheitsdokument oder diesen markierten Artikel zu bilden. Dieser Artikel kann beispielsweise ein Exemplar aus einer limitierten Serie gleichartiger Produkte sein, dessen Einzigartigkeit mittels einer Nummerierung dokumentiert wird. Diese Nummerierung kann durch die Individualisierung des mit dem Sicherheitsmerkmal versehenen Sicherheitselements realisiert werden. Das Wert- und/oder Sicherheitsprodukt kann beispielsweise auch eine Smartcard sein. Das Wert- und/oder Sicherheitsdokument kann im ID 1-, ID 2-, ID 3- oder in irgendeinem anderen normierten oder nicht normierten Format vorliegen, beispielsweise in Heftform, wie bei einem passähnlichen Gegenstand, oder beispielsweise in Kartenform. Ein Wert- und/oder Sicherheitsprodukt ist im Allgemeinen ein Laminat aus mehreren Dokumentenlagen, die passergenau unter Wärmeeinwirkung und unter erhöhtem Druck flächig miteinander verbunden worden sind. Diese Produkte sollen den normierten Anforderungen genügen, beispielsweise gemäß ISO 10373, ISO/IEC 7810, ISO 14443. Die Produktlagen bestehen beispielsweise aus einem Trägermaterial, das sich für eine Lamination eignet.

Das Wert- und/oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, ferner Papier, Pappe, Glas, Metall oder Keramik. Das Produkt kann aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus 3 bis 12, vorzugsweise 4 bis 10 Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise ein kinegraphisches Element) oder eine Kratzschutzfolie sein. Derart gebildete Overlaylagen schützen ein darunter angeordnetes Sicherheitsmerkmal und/oder verleihen dem Dokument die erforderliche Abriebfestigkeit. Das Sicherheitsmerkmal ist vorzugsweise auf mindestens einer der inneren Lagen gebildet.

Soweit in der Beschreibung und in den Ansprüchen der vorliegenden Anmeldung der Begriff 'Sicherheitsmerkmal' genannt wird, ist darunter ein Merkmal zu verstehen, das vorzugsweise einen mittels optischer Erkennungsverfahren erfassbaren optischen Eindruck hervorruft, der durch eine optisch wahrnehmbare Gestaltung erzeugt wird. Die Gestaltung des optisch wahrnehmbaren Sicherheitsmerkmals kann ein- oder mehrfarbig, schwarz/weiß oder in Grautönen ausgebildet sein. Die Gestaltung beinhaltet vorzugsweise eine optisch wahrnehmbare individualisierende Information. Das Sicherheitsmerkmal kann dazu ausgebildet sein, von einem Benutzer unmittelbar wahrgenommen zu werden, oder es kann sich um ein maschinenlesbares Merkmal handeln. In letzterem Falle wird das Sicherheitsmerkmal mittels einer beispielsweise elektromagnetische Strahlung ortsaufgelöst aufnehmenden Vorrichtung erfasst, ausgegeben und durch einen Betrachter wahrgenommen oder mittels einer hierfür vorgesehenen weiteren Vorrichtung ausgewertet.

Soweit in der Beschreibung und in den Ansprüchen der vorliegenden Anmeldung der Begriff 'Muster' genannt wird, ist darunter eine beliebige zweidimensionale Anordnung mindestens einer Struktur auf einer Substratoberfläche zu verstehen. Ein Muster kann jede abstrakte oder gegenständliche Form aufweisen und beispielsweise aus Linien, Flächen, auch in beliebiger Zusammenstellung, oder alternativ aus Zeichen, wie alphanumerischen Zeichen, bestehen oder Bilder wiedergeben, beispielsweise das Photo des Dokumenteninhabers oder Darstellungen von bestimmten Objekten. Es können auch beliebige andere Informationen grafisch dargestellt werden.

Die der vorliegenden Erfindung zugrunde liegenden Aufgaben werden durch die vorliegende Erfindung gelöst.

Gemäß einem ersten Aspekt betrifft die vorliegende Erfindung ein Verfahren zum Herstellen eines Sicherheitsmerkmals für ein Wert- und/oder Sicherheitsprodukt. Das Verfahren umfasst die folgenden Verfahrensschritte:
(a) zunächst wird ein Oberflächen aufweisendes Substrat bereitgestellt;
(b) ferner wird mindestens ein eine Vorderseite und eine Rückseite aufweisendes Applikationselement bereitgestellt; derartige Applikationselemente sind bekannt und stellen typischerweise selbst Sicherheitselemente dar, die als Transferelemente auf ein Sicherheitsdokument oder einen anderen Artikel aufgebracht werden können; alternativ dazu kann ein Applikationselement auch ein reines Dekorelement sein;
(c) jeweils eine Schicht eines Haftvermittlers wird auf einer der Oberflächen des Substrats und/oder auf der Rückseite des mindestens einen Applikationselements erzeugt; der Haftvermittler wird entweder ganzflächig oder in Form eines haftvermittelnden Musters auf der Substratoberfläche oder auf der Rückseite des mindestens einen Applikationselements erzeugt; falls ein haftvermittelndes Muster erzeugt wird, befindet sich der Haftvermittler ausschließlich in mindestens einem von mindestens einem Freibereich begrenzten Adhäsionsbereich auf der Substratoberfläche oder auf der Rückseite des mindestens einen Applikationselements;
(d) danach wird das jeweilige Applikationselement mit seiner gegebenenfalls den Haftvermittler aufweisenden Rückseite auf die gegebenenfalls mit der jeweiligen Schicht des Haftvermittlers versehene Oberfläche des Substrats aufgebracht, oder das jeweilige Applikationselement wird mit seiner den Haftvermittler aufweisenden Rückseite auf die Oberfläche des Substrats aufgebracht, sodass das Applikationselement und die Substratoberfläche über den Haftvermittler miteinander in Kontakt kommen;
(e) danach wird das jeweilige Applikationselement ausschließlich in dem mindestens einen Adhäsionsbereich mit der Oberfläche des Substrats unlösbar verbunden; in dem mindestens einen Freibereich wird das jeweilige Applikationselement mit der Substratoberfläche nicht unlösbar verbunden; eine Möglichkeit der unlösbaren Verbindung besteht darin, dass sich der Haftvermittler ausschließlich in dem mindestens einen Adhäsionsbereich befindet und dort die unlösbare Verbindung herstellt; eine andere Möglichkeit besteht darin, dass der Haftvermittler zwar sowohl in den Adhäsionsbereichen als auch in den Freibereichen vorliegt, aber ausschließlich in dem mindestens einen Adhäsionsbereich ausgehärtet wird, nicht aber in dem mindestens einen Freibereich, sodass nur dort eine unlösbare Verbindung gebildet wird;
(f) schließlich werden sich in dem mindestens einen Freibereich befindende und mit der Oberfläche des Substrats nicht unlösbar verbundene Teile des jeweiligen Applikationselements von der Oberfläche des Substrats mechanisch entfernt, während sich in dem mindestens einen Adhäsionsbereich befindende Teile des Applikationselements mit der Oberfläche des Substrats unlösbar verbunden bleiben.

Damit die sich in den Freibereichen befindenden Teile des Applikationselements mechanisch problemlos entfernt werden können, müssen diese von den Teilen des Applikationselements, die sich in den Adhäsionsbereichen befinden, leicht getrennt werden können. Hierzu weist das jeweilige Applikationselement regelmäßig angeordnete Dünnbereiche zur Schwächung der Reißfestigkeit des Materials des Applikationselements in diesen Bereichen auf. Die sich in dem mindestens einen Freibereich befindenden Teile des jeweiligen Applikationselements trennen sich beim mechanischen Entfernen von der Oberfläche des Substrats entlang der Dünnbereiche von den sich in dem mindestens einen Adhäsionsbereich befindenden Teilen des jeweiligen Applikationselements. Zwischen den Dünnbereichen befinden sich erhabene Bereiche. Das Raster der Dünnbereiche und der erhabenen Bereiche erstreckt sich vorzugsweise über die gesamte Fläche des Applikationselements und ist durch Rasterzellen gebildet. Die Dünnbereiche sind somit in einem Raster angeordnet. Nach dem mechanischen Entfernen der sich in dem mindestens einen Freibereich befindenden und mit der Oberfläche des Substrats nicht unlösbar verbundenen Teile des jeweiligen Applikationselements von der Oberfläche des Substrats bilden mindestens zwei, vorzugsweise mehr als zwei, beispielsweise mehr als 5, noch weiter bevorzugt mehr als 10, noch weiter bevorzugt mindestens 100, noch weiter bevorzugt mindestens 10.000 und am meisten bevorzugt mindestens 1.000.000 Rasterzellen (vorzugsweise maximal 100.000.000 Rasterzellen) in dem mindestens einen Adhäsionsbereich ein vorzugsweise individualisierendes Muster. Dadurch lassen die sich in dem mindestens einen Freibereich befindenden Teile des jeweiligen Applikationselements beim mechanischen Entfernen von der Oberfläche des Substrats von den sich in dem mindestens einen Adhäsionsbereich befindenden Teilen des jeweiligen Applikationselements trennen, wobei die Trennung in den Dünnbereichen stattfindet.

Das Applikationselement kann somit ganz besonders bevorzugt zur Einbringung einer individualisierenden, vorzugsweise personalisierenden, Information in das Wert- und/oder Sicherheitsprodukt dienen. Hierzu wird das Applikationselement in einzelne Bereiche (Pixel) getrennt, wobei dann eine Mehrzahl von Pixeln auf die Oberfläche des Wert- und/oder Sicherheitsproduktes übertragen wird. Hierbei kann die Auflösung der Pixel von einer rudimentären Matrix (beispielsweise 6x8-Punktematrix) über übliche Auflösungen von 300 bis 600 dpi (dots per inch) zu sehr hohen Auflösungen von beispielsweise 2400 dpi reichen, wobei die besonders hohen Auflösungen beispielsweise auch die Einbringung einer individualisierenden Information in Form einer Mikroschrift ermöglichen. Die Pixel sind durch Dünnbereiche voneinander getrennt. Jedes Pixel ist somit von einem Dünnbereich umgeben.

Gemäß einem zweiten Aspekt betrifft die vorliegende Erfindung ein Wert- und/oder Sicherheitsprodukt. Dieses Produkt weist folgende Merkmale auf:
(a) das Oberflächen aufweisende Substrat sowie
(b) mindestens ein Sicherheitsmerkmal an einer der Oberflächen des Substrats; das Sicherheitsmerkmal ist durch jeweils ein Applikationselement gebildet; mindestens ein Teil des jeweiligen Applikationselements ist ausschließlich in dem mindestens einen Adhäsionsbereich mittels des Haftvermittlers mit der Oberfläche des Substrats unlösbar verbunden; dagegen befindet sich in dem mindestens einen Freibereich kein Teil des jeweiligen Applikationselements.

Zur Lösung der vorgenannten Aufgabe weist das mindestens eine sich in dem mindestens einen Adhäsionsbereich befindende Teil des Applikationselements regelmäßig geformt verlaufende Ränder auf, die entlang von die Reißfestigkeit des Materials des Applikationselements schwächenden Dünnbereichen in dem Material verlaufen. Diese Ränder verlaufen zumindest im Wesentlichen entlang von aus in einem Raster angeordneten Rasterzellen gebildeten Dünnbereichen in dem Applikationselement, wobei mindestens zwei, vorzugsweise mehr als zwei, beispielsweise mehr als 5, noch weiter bevorzugt mehr als 10, noch weiter bevorzugt mindestens 100, noch weiter bevorzugt mindestens 10.000 und am meisten bevorzugt mindestens 1.000.000 Rasterzellen (vorzugsweise maximal 100.000.000 Rasterzellen), in dem mindestens einen Adhäsionsbereich ein individualisierendes, vorzugsweise personalisierendes Muster bilden.

Mit dem erfindungsgemäßen Verfahren ist es möglich, mit einem Kalt- oder Heißfolienveredelungsverfahren hergestellte Sicherheitsmerkmale derart abzuwandeln, dass sie eine Kennzeichnung bilden. Somit können handelsübliche Kalt- und Heißprägefolien individualisierend appliziert werden. Die Sicherheitsmerkmale können in Form der Applikationselemente vorliegen, mit dem erfindungsgemäßen Verfahren auf die Substratoberfläche aufkaschiert werden und dann unter Bildung eines individualisierenden Musters strukturiert werden. Das aufzubringende Element kann seinerseits bereits ein ein Sicherheitsmerkmal aufweisendes Sicherheitselement sein, beispielsweise ein Echtheitsmerkmal oder ein die Gattung des Wert- und/oder Sicherheitsproduktes bestimmendes Merkmal. Im Allgemeinen wird dieses Element keine individualisierende Information beinhalten. Durch die durch die Verteilung der Adhäsionsbereiche und der Freibereiche vorgegebene Strukturierung dieses Elements wird eine Überlagerung dieses Sicherheitsmerkmals mit dem erfindungsgemäßen Sicherheitsmerkmal der Strukturierung erreicht. Das erfindungsgemäße Sicherheitsmerkmal kann insbesondere individualisierend, beispielsweise personalisierend, sein.

Noch ein weiterer Vorteil der Erfindung besteht darin, Druckfarben, zum Beispiel eine nur im Siebdruck oder Stichtiefdruck druckbare Farbe, wie zum Beispiel eine OVI (optically variable ink), wie sie zum Beispiel von Banknoten bekannt ist, mittels eines digitalen Druckverfahrens personalisiert zu strukturieren. Hierzu wird die OVI zunächst auf eine Folie flächig aufgebracht, zum Beispiel mittels Siebdruck. Anschließend wird diese Folie wie vorbeschrieben als Applikationselement verwendet.

Das Applikationselement kann durch ein ein Sicherheitsmerkmal aufweisendes Sicherheitselement gebildet sein, beispielsweise ein Echtheitsmerkmal oder ein die Gattung des Wert- und/oder Sicherheitsproduktes bestimmendes Merkmal, etwa ein die Denomination einer Banknote anzeigendes Prägehologramm. Typischerweise enthält dieses Element keine individualisierende Information. Durch die durch die Haftvermittlerschicht strukturierende Formgebung dieses Elements wird eine Überlagerung dieses Sicherheitsmerkmals mit dem erfindungsgemäßen Sicherheitsmerkmal der Strukturierung erreicht. Dieses Sicherheitsmerkmal braucht jedoch nicht zwingend individualisierend zu sein. Für eine Vielzahl von Dokumenten kann auch jeweils dasselbe Muster gebildet werden.

Durch die Ausstattung des Applikationselements mit Dünnbereichen, die eine Schwächung des Materials darstellen, zerreißt das Element entlang dieser Bereiche, sodass die zu entfernenden Teile damit mechanisch leichter entfernt werden können. Dadurch wird eine kontrollierte Formgebung der Teile des Elements, die mit der Substratoberfläche unlösbar verbunden sind, erreicht. Auf diese Weise ergibt sich ein schärferer Kontrast des erzeugten Musters. Das Muster kann außerdem mit einer höheren Auflösung erzeugt werden. Dies schließt auch die Möglichkeit der Strukturierung von applizierten Flächen des Applikationselements ein, die Freibereiche enthalten, in denen das Material des Applikationselements von der Substratoberfläche wieder abgezogen werden soll, selbst wenn diese Freibereiche verhältnismäßig klein sind. Auch derartige kleine Inseln in einer haftfest verbundenen großen Fläche des Applikationselements werden beim mechanischen Entfernen problemlos mit entfernt. Würden die Dünnbereiche nicht erzeugt, würde das Material weniger kontrolliert und damit nicht exakt an den Grenzlinien zwischen den Adhäsionsbereichen und den Freibereichen zerreißen, was die Auflösung des Musters begrenzen würde. Außerdem werden dadurch die Kanten der Bereiche, in denen die unlösbare Verbindung zwischen dem Applikationselement und der Substratoberfläche gebildet wird, geglättet. Das mechanische Entfernen der nicht fest (unlösbar) verbundenen Teile des Applikationselements wäre insbesondere dann ein Problem, wenn diese verhältnismäßig dick wären. Beispielsweise können mit dem erfindungsgemäßen Verfahren in den Adhäsionsbereichen Erhebungen als Teile des Applikationselements in Form einer Blindenschrift, beispielsweise der Braille-Schrift, auf der Substratoberfläche gebildet werden. Diese Erhebungen müssen zur ausreichend sicheren taktilen Erkennung eine Mindesthöhe aufweisen, beispielsweise eine Höhe von 300 µm, was wiederum eine entsprechende Dicke des Applikationselements erfordert. Derartige dicke Materialien, beispielsweise aus einem Polymer, reißen nicht mit der gewünschten Präzision, sodass die Bildung dieser Erhebungen mit der erforderlichen Genauigkeit und Auflösung kaum möglich wäre. Durch Ausstattung des Applikationselements mit den Dünnbereichen trennen sich die Teile auch eines verhältnismäßig dicken Applikationselements von den dazwischen liegenden Teilen (in den Freibereichen) problemlos. Daher können auch relativ dicke Kalt- und Heißprägefolien auf das Substrat appliziert und partiell wieder entfernt werden. Da die nicht unlösbar verbundenen Teile des Applikationselements leichter abreißbar sind, ist die Folienentfernung, beispielsweise durch Abziehen, deutlich verbessert und vereinfacht.

Durch die Bildung der Dünnbereiche kann ferner die Festigkeit des Applikationselements auf der Substratoberfläche verbessert werden, weil der Haftvermittler in die Dünnbereiche eindringt, sodass die Kontaktfläche des Haftvermittlers mit dem Applikationselement vergrößert wird.

Ein weiterer Vorteil des erfindungsgemäßen Verfahrens besteht darin, dass die Ränder der sich in den Adhäsionsbereichen befindenden Teile des Applikationselements durch die regelmäßige Anordnung der Dünnbereiche einen regelmäßigen Randverlauf aufweisen, d.h. einer speziellen Form folgen, nämlich entlang von Reißlinien, die durch die Dünnbereiche definiert sind. Falls die Dünnbereiche beispielsweise in einem hexagonalen Raster angeordnet sind (wabenförmige Struktur), ergibt sich eine diesem Raster entsprechende regelmäßige Randstruktur der Elementteile auf der Substratoberfläche. Dieser Randverlauf unterscheidet sich von dem eines mit einem herkömmlich hergestellten Folienveredelungsverfahren hergestellten Produktes ganz maßgeblich, da letzteres unregelmäßig gebildete Ränder aufweist. Durch die Randstrukturierung wird auch die Oberfläche strukturiert, auf der das Applikationselement aufgebracht ist. Diese Unterschiede können als weiteres Echtheitsmerkmal für das Wert- und/oder Sicherheitsprodukt dienen. Durch gezielte Formgebung der Reißlinien stehen daher unterschiedliche Randstrukturen zur Verfügung. Diese Variabilität kann für eine Identifizierung des jeweiligen Dokuments oder Dokumententyps herangezogen werden.

In einer bevorzugten Weiterbildung der vorliegenden Erfindung werden die Dünnbereiche in einer ersten Ausführungsform bereits beim Herstellen des jeweiligen Applikationselements durch einen Materialaufbau in den Bereichen außerhalb der Dünnbereiche erzeugt. In einer zweiten Ausführungsform dieser Weiterbildung werden die Dünnbereiche erst nach dem Herstellen des jeweiligen Applikationselements durch Materialentfernung oder Materialumformung erzeugt. Diese Vorgehensweisen können auch kombiniert werden. Falls die Dünnbereiche erst nach dem Herstellen des jeweiligen Applikationselements durch Materialumformung erzeugt werden, kann in einer weiteren Weiterbildung der vorliegenden Erfindung hierzu ein Prägeverfahren eingesetzt werden. Falls die Dünnbereiche nach dem Herstellen des jeweiligen Applikationselements durch Materialabtrag erzeugt werden, kann hierzu in einer alternativen Weiterbildung ein chemisches Ätzverfahren oder ein Corona-Ätzverfahren eingesetzt werden. Falls die Dünnbereiche bereits vor dem Herstellen des jeweiligen Applikationselements erzeugt werden, kann in einer weiteren Weiterbildung der vorliegenden Erfindung hierzu ein Druckverfahren, beispielsweise ein Siebdruckverfahren, eingesetzt werden. Mit dem Druckverfahren wird zwischen den Dünnbereichen eine verstärkte Schicht durch Materialauftrag in Bereichen außerhalb der Dünnbereiche erzeugt. Dadurch ist die Dicke des Applikationselements in den Dünnbereichen lokal vermindert.

Falls die Dünnbereiche mittels eines Druckverfahrens durch Materialauftrag außerhalb dieser Bereiche erzeugt werden, kann beispielsweise ein mittels elektromagnetischer Strahlung, beispielsweise UV-Strahlung, härtbares Polymer, beispielsweise ein Cyanoacrylatlack, in einer Schicht aufgetragen werden, sodass sich in den Dünnbereichen eine verminderte Dicke des Applikationselements einstellt.

Falls die Dünnbereiche durch Materialumformung mittels eines Prägeverfahrens erzeugt werden, kann mittels Ultraschall und/oder unter Einbringung von Wärme und Temperaturerhöhung mit einem Werkzeug, beispielsweise einem Prägestempel oder einer Prägeplatte / einem Prägeblech, die zur Erzeugung der Dünnbereiche erforderliche Struktur beispielsweise in eine schmelzbare Polymerschicht unter Aufbringung eines Pressdruckes eingedrückt werden und die erzeugte Struktur anschließend durch Abkühlen oder durch mittels elektromagnetischer Strahlung verursachte Aushärtung des Polymers fixiert werden. Beispielsweise kann die Polymerschicht dabei lokal aufschmelzen. Hierzu weist das Werkzeug die gewünschte Struktur in Form eines Negativs zu den Dünnbereichen und erhabenen Bereichen auf. Die Werkzeugstruktur wird in das Polymer abgeformt. Beispielsweise kann eine thermoplastische Polymerschicht eingesetzt werden, die unter Temperaturerhöhung mittels des Werkzeuges abgeformt wird.

Falls die Dünnbereiche nach dem Herstellen des Applikationselements durch Materialentfernung erzeugt werden, etwa mittels eines chemischen Ätzverfahrens, kann dieses beispielsweise auf eine Metallschicht einwirken, indem die Metallschicht in den Bereichen, in denen die Metallschicht gedünnt werden soll, lokal entfernt wird (Entmetallisierung). Hierfür erforderliche Verfahren und beispielsweise chemische Ätzmittel sind dem Fachmann bekannt. Beispielsweise kann die Metallschicht eines Oberflächenhologramms in den Dünnbereichen partiell entfernt werden. Falls das abzudünnende Material kein Metall ist, sondern eine ursprünglich homogene Schicht oder Folie aus einem anderen Material, muss das Ätzmittel entsprechend angepasst werden. Als weitere Alternative für ein Abtragsverfahren zur Erzeugung der Dünnbereiche kann das Korona-Ätzverfahren eingesetzt werden. Andere Abtragsverfahren sind das Verdampfen (beispielsweise mit einem IR-Laser), das Laserablatieren durch Zersetzen des Materials (beispielsweise mit einem UV-Laser) sowie das chemische Ätzen mit geeigneten Ätzmitteln.

Die Dünnbereiche erstrecken sich vorzugsweise nicht vollständig durch das Applikationselement hindurch. Falls das Applikationselement zusätzlich zu einem Funktionselement, beispielsweise zu einem Volumenhologramm, das die funktionellen Eigenschaften des Applikationselements definiert, eine Trägerlage und gegebenenfalls zusätzlich auch eine Trennlage zwischen dem Funktionselement und der Trägerlage aufweist, können sich die Dünnbereiche entweder ausschließlich in das Funktionselement hinein und gegebenenfalls vollständig durch dieses hindurch oder ausschließlich in die Trägerlage und gegebenenfalls auch in die Trennlage hinein oder durch diese vollständig hindurch erstrecken. Falls das Funktionselement sowohl eine Funktionslage als auch eine Basislage angrenzend an die Funktionslage aufweist, können sich die Dünnbereiche ausschließlich in die Basislage oder durch diese vollständig hindurch oder außerdem auch in die Funktionslage hinein erstrecken. Allerdings kann es auch gedünnte Teilbereiche geben, in denen das Material des Applikationselements vollständig abgetragen (oder nicht aufgebaut) ist, sodass sich Perforationen ergeben. Die Dünnbereiche liegen vorzugsweise auf einer Seite des Applikationselements vor, oder beide Seiten des Applikationselements weisen Dünnbereiche auf. In letzterem Falle sind die Dünnbereiche beider Seiten vorzugsweise passergenau zueinander angeordnet, sodass sie gemeinsame Reißlinien definieren.

Die Dünnbereiche sind zweidimensional gerastert, d.h. in einer vorzugsweise regelmäßigen zweidimensionalen Anordnung ausgebildet. Dementsprechend sind auch die dazwischen liegenden erhabenen Bereiche regelmäßig, d.h. gerastert, angeordnet. Sie können beispielsweise durch durchgehende Gräben gebildet sein oder auch durch zueinander beabstandete Vertiefungen oder Perforationen. Die Gräben können zusätzlich Perforationen aufweisen. Die Dünnbereiche können entweder ausschließlich durch Gräben gebildet sein, die beispielsweise eine einheitliche Tiefe aufweisen, oder auch zusätzlich zu Gräben mit einheitlicher Tiefe Perforationen aufweisen, die das Material des Applikationselements vollständig durchdringen. Alternativ können auch ausschließlich Perforationen vorliegen oder Gräben mit variierender Tiefe oder noch andere Arten von Dünnbereichen. Die die Dünnbereiche bildenden Aushöhlungen, Aussparungen, Einschnitte, Ausnehmungen, Durchbrüche, Mulden und dergleichen liegen vorzugsweise in einer regelmäßigen Anordnung vor. Beispielsweise kann ein quadratisches, rechteckiges, parallelogrammartiges, durch Sechsecke gebildetes oder auch durch gekrümmte Grenzlinienscharen, die einander in einem vorgegebenen beliebigen Winkel kreuzen, gebildetes Gitter vorliegen. Durch das Gitter der Dünnbereiche werden Rasterzellen gebildet (Rasterzellen zwischen den Dünnbereichen = Pixel in erhabener Form, d.h. durch die Dünnbereiche in Rasterform gebildete pixelierte Applikationselemente). Die Pixel können ,punktförmig' oder in Form von Streifen oder in noch anderer Form erhaben gegenüber den Dünnbereichen vorliegen. Die Abmessungen der Rasterzellen sind durch die gewünschte Feinheit der Konturen des zu erzeugenden Musters vorgegeben. Je präziser die Konturen des zu bildenden Musters nachgezeichnet werden sollen, desto feiner muss auch das Raster der Dünnbereiche gebildet werden. Beispielsweise weist dieses Raster Rasterzellen mit lateralen Abmessungen von 50 µm bis 500 µm, vorzugsweise von 70 µm bis 200 µm, auf. Die Breite der Dünnbereiche ist für deren Funktion der Schwächung des Materials des Applikationselements unerheblich. Allerdings ergibt sich die Breite durch das gewählte Erzeugungsverfahren. Die Tiefe der Vertiefungen o.ä. ist durch die Gesamtdicke des Applikationselements bestimmt. Die Restdicke (Gesamtdicke des Applikationselements abzüglich der Gesamttiefe der Vertiefungen [bei Dünnbereichen an beiden Seiten des Applikationselements abzüglich der Summe der einander gegenüber liegenden Vertiefungen]) sollte so gering sein, dass das Applikationselement vorzugsweise ausschließlich in den Dünnbereichen leicht reißt. Beispielsweise kann die Restdicke 5 µm bis 200 µm, weiter bevorzugt 30 µm bis 100 µm, betragen.

Das Substrat kann in Form einer Folie oder in Form eines starreren Gegenstandes als einer Folie, wie in Form einer Platte oder Karte, vorliegen. Das Substrat kann in Form eines Bogens/Blattes bzw. einer Platte/Karte oder eines Bandes vorliegen. Es kann einlagig oder aus mehreren Lagen gebildet sein. Es kann aus einem der für das Wert- und/oder Sicherheitsprodukt genannten Polymere hergestellt sein und ungefüllt oder mit Füllstoffen, wie Pigmenten, Verstärkungsmaterialien, etwa Fasern, gefüllt vorliegen. Das Substrat kann demnach transparent oder transluzent (zwar nicht oder kaum lichtabsorbierend, aber lichtstreuend) oder opak sein. Es kann ferner ungefärbt sein oder mit im sichtbaren und/oder UV- und/oder IR-Spektralbereich absorbierenden und/oder emittierenden Farbstoffen, einschließlich Lumineszenzstoffen, gefärbt sein (d.h. in diesen Spektralbereichen absorbieren). Das Substrat kann ein Vorprodukt (Rohling) für ein Wert- und/oder Sicherheitsdokument sein und zusätzlich zu dem mit dem erfindungsgemäßen Verfahren zu bildenden Sicherheitsmerkmal weitere Sicherheitsmerkmale, beispielsweise Guillochen, einen Sicherheitsfaden, Mikroschrift, ein fluoreszierendes Druckmuster oder einen Durchsichtspasser, aufweisen.

Das Applikationselement kann in Form eines Bandes oder Bogens vorliegen. Es kann eine sehr geringe Dicke aufweisen, beispielsweise 5 µm. Die Dicke ist aber bevorzugt größer, da sich der Anwendungsbereich der vorliegenden Erfindung insbesondere auf dickere Applikationselemente erstreckt. Die Dicke kann beispielsweise mindestens 100 µm oder mindestens 250 µm oder mindestens 500 µm betragen. Die Dicke kann bis zu 1,5 mm, vorzugsweise bis zu 1,0 mm und besonders bevorzugt bis zu 750 µm betragen. Diese Werte beziehen sich auf die Dicke außerhalb der Dünnbereiche. Das Applikationselement kann eine Trägerfolie aufweisen, die ein Funktionselement trägt, wobei sich zwischen der Trägerfolie und dem Funktionselement gegebenenfalls zusätzlich eine Trennfolie oder Trennschicht befindet. Die vorgenannte Dicke des Applikationselements ist als Dicke des Funktionselements zu verstehen. Alternativ ist das Applikationselement ausschließlich aus dem Funktionselement gebildet. Die Trägerfolie des Applikationselements kann beispielsweise aus einem Acryl- oder Methacrylpolymer gebildet sein. Die Trennfolie/-schicht kann beispielsweise aus einem Oligo- oder Polyalkylen, beispielsweise Paraffin, Polyethylen oder Polypropylen, oder einem Siliconpolymer gebildet sein. Die Trennfolie/- schicht dient dazu, dass sich die Trägerfolie beim oder nach dem Applizieren des Funktionselements auf die Substratoberfläche von dem Funktionselement ablöst, sodass das Funktionselement auf der Substratoberfläche verbleibt, soweit es mit dem Haftvermittler auf der Substratoberfläche haftfest verbunden ist. Die Haftfestigkeit zwischen der Trennfolie/-schicht und der Trägerfolie einerseits und den angrenzenden Lagen bzw. Schichten des Funktionselements andererseits ist vorzugsweise groß genug, um die sich in den Freibereichen befindenden Teile des Funktionselements unter Überwindung der Kohäsionskräfte innerhalb des Funktionselements von den sich in den Adhäsionsbereichen befindenden Funktionselementteilen an den Stellen der Dünnbereiche trennen zu können, sodass die Funktionselementteile in den Adhäsionsbereichen beim Abziehen des Applikationselements auf der Substratoberfläche verbleiben.

Das Funktionselement kann je nach dessen Funktion ein- oder mehrlagig-/schichtig aufgebaut sein. Jede dieser Lagen kann aus Polymer, Metall, einer Lackschicht, Farbschicht oder dergleichen gebildet sein. Das Polymer kann eines der für das Wert- und/oder Sicherheitsprodukt angegebenen Materialien und transparent, transluzent oder opak sein. Das Polymer kann ferner ungefüllt oder mit Füllstoffen gefüllt vorliegen. Es kann des Weiteren ungefärbt sein oder mit im sichtbaren und/oder UV- und/oder IR-Spektralbereich absorbierenden und/oder emittierenden Farbstoffen, einschließlich Lumineszenzstoffen, und/oder Pigmenten, einschließlich lumineszierenden Pigmenten und optisch variablen Pigmenten, gefärbt sein. Jede der Lagen kann hinsichtlich der Polymer- oder anderen Materialien, Farbstoffe und Füllstoffe unterschiedlich ausgebildet sein. Die Metallschicht kann aus Silber, Gold, Aluminium oder einem anderen Metall bestehen. Ferner sind auch Legierungen denkbar, die bestimmte Färbungen des Metalls aufweisen, wobei unterschiedliche Metalle und/oder Metalllegierungen strukturiert, d.h. in einem bestimmten Muster, angeordnet sein können. Das Metall kann mit herkömmlichen Methoden, beispielsweise durch Aufdampfen, Sputtern, elektrochemisches Abscheiden, Aufkaschieren und dergleichen, auf eine Polymerlage aufgebracht oder freitragend sein. Der Aufbau der Funktionsschicht richtet sich nach der Art des damit gebildeten Sicherheitsmerkmals.

Das Applikationselement ist in einer bevorzugten Weiterbildung der vorliegenden Erfindung ein Sicherheitselement. Alternativ kann es auch ein ausschließlich dekoratives Element sein. Das Applikationselement kann demnach durch ein Sicherheitsmerkmal gebildet sein oder dieses enthalten. Das Applikationselement kann insbesondere ein lichtbeugendes und/oder lichtbrechendes und/oder lichtreflektierendes und/oder lichtabsorbierendes und/oder lichtemittierendes und/oder elektrisch leitfähiges und/oder magnetisierbares Element sein. Insbesondere kann das Applikationselement durch ein mit optisch variablem Pigment versehenes Element, einen Polarisationsfilter, einen Interferenzfilter, ein Hologramm, ein kinegraphisches Element, ein Kippbild, ein OVD (optically variable device), einen Magnetstreifen oder ein Metal-Dielectric Optical Thin Film gebildet sein. Unter einem Metal-Dielectric Optical Thin Film sind optisch variable Folien auf Basis von Interferenzeffekten zu verstehen (siehe Optical Document Security, R.L. van Renesse, Artech House, Boston, 3. Auflage, 2005, Seite 231). Ganz besonders bevorzugt kann das Applikationselement ein OVD, ein OVI-Farbe (optically variable ink) tragendes Element, d.h. ein Element, das mindestens eine mit optisch variablem Pigment versehene Lage/Schicht aufweist, ein beispielsweise zur Bildung einer OLED (organischen Leuchtdiode) oder LED (Leuchtdiode) geeignetes elektrisch leitendes Element, ein Metalleffekt-Element, ein metallisch reflektierendes Element, ein magnetisches Element, beispielsweise für individualisierende Magnetstreifen, ein Metal-Dielectric Optical Thin Film, ein lichtpolarisierendes Element, ein Interferenz-Element, ein Element mit irisierenden Farben, ein holographisches Element, wie ein Prägehologramm oder ein anderes lichtbeugendes Element, oder dergleichen sein. Diese Elemente können jeweils in Form einer Folie / eines Filmes vorliegen. Gegebenenfalls wird die Funktionsschicht des Elements von einer Basislage getragen. Alternativ kann das Element auch ein freitragendes Funktionselement sein. Beispielsweise kann das Sicherheitselement ein lichtbeugendes Element aufweisen, insbesondere ein Hologramm oder ein OVD, das ein Transferelement ist und von der Trägerfolie getragen wird. Ein OVD (kinegraphisches Element) ist eine lichtbeugende Struktur, die verschiedene Darstellungen unter unterschiedlichen Betrachtungswinkeln zeigt. Durch die mechanische Entfernung der Teile des Applikationselements, die sich in den Freibereichen befinden, erscheint das übertragene Muster nach dem Abziehen von dem Substrat als Negativ des Musters der Adhäsionsbereiche in dem abgezogenen Rest des Applikationselements.

In einer möglichen erfindungsgemäßen Ausführungsform wird das Applikationselement, beispielsweise eine Kalt- oder Heißklebefolie, in herkömmlicher Art und Weise auf die Substratoberfläche appliziert. Hierzu wird die jeweilige Schicht des Haftvermittlers in einer bevorzugten ersten Ausführungsvariante der vorliegenden Erfindung ausschließlich in dem mindestens einen Adhäsionsbereich auf der Oberfläche des Substrats und/oder auf der Rückseite des jeweiligen Applikationselements erzeugt, nicht aber in dem mindestens einen Freibereich. Durch Aushärten des Haftvermittlers wird das jeweilige Applikationselement mit der Oberfläche des Substrats dann unlösbar verbunden. Durch das Aufbringen des Haftvermittlers ausschließlich in den Adhäsionsbereichen auf die Substratoberfläche oder auf die Rückseite des Applikationselements wird das Muster, in dem das Applikationselement beim mechanischen Entfernen strukturiert wird, bereits vorgebildet.

In einer bevorzugten Weiterbildung dieser Ausführungsvariante wird die jeweilige Schicht des Haftvermittlers mittels eines digitalen Druckverfahrens erzeugt, bevorzugt mittels eines Non-Impact-Printing-Verfahrens, ganz besonders bevorzugt mit einem Tintenstrahldruckverfahren (Inkjet-Verfahren). Das Druckmittel, das mit einem Druckwerk, vorzugsweise mit einem Tintenstrahldrucker aufgebracht wird, bildet den Haftvermittler. Der Haftvermittler kann in Form eines Kaltfolienklebers, eines Heißfolienklebers, eines Lackes, einer Tinte oder dergleichen vorliegen. Das Druckmittel kann in Form einer Lösung des Haftvermittlers, in der dieser in einem Lösungsmittel gelöst oder suspendiert vorliegt, oder ohne Verwendung eines Lösungsmittels bereitgestellt werden. Das Druckmittel kann außerdem geeignete Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme und dergleichen enthalten, die üblicherweise in Tinten für die Verwendung beim Tintenstrahldruck enthalten sind. Der Haftvermittler ist dazu ausgebildet, unter geeigneten Bedingungen eine feste Verbindung mit der Substratoberfläche und mit dem Applikationselement einzugehen, beispielsweise durch Aktivierung mittels Temperaturerhöhung oder durch Bestrahlung mit elektromagnetischer Strahlung geeigneter Wellenlänge, beispielsweise mit UV-Strahlung. Zumindest im Falle der Aktivierung durch Bestrahlung mit elektromagnetischer Strahlung wird der Haftvermittler beim Bestrahlen vernetzt. Der Haftvermittler kann beispielsweise mindestens ein Polymer enthalten, das bei Raumtemperatur klebrig ist, oder durch dieses gebildet sein, und/oder mindestens ein Polymer, das erst bei erhöhter Temperatur, beispielsweise 100°C bis 300°C, klebrig wird, und/oder mindestens ein Polymer, das zunächst nicht ausgehärtet und dann unter Einwirkung der elektromagnetischen Strahlung ausgehärtet wird, wodurch die feste Verbindung zwischen der Substratoberfläche und dem Applikationselement herbeigeführt wird. Beispielsweise kann der Haftvermittler ein Lack sein, zum Beispiel ein Acrylharz basierender Lack. Das Acrylharz kann unter UV-Bestrahlung aushärten. Der Haftvermittler kann auch durch mechanisches Anpressen aushärten, z.B. bei Verwendung eines geeigneten Cyanoacrylat-Klebers. Der Haftvermittler ist vorzugsweise transparent oder transluzent. Er kann grundsätzlich auch opak sein. Er kann ungefärbt oder gefärbt sein.

In einer bevorzugten zweiten Ausführungsvariante der vorliegenden Erfindung wird das jeweilige Applikationselement mit der Oberfläche des Substrats unlösbar verbunden, indem Haftvermittler eingesetzt wird, der mittels elektromagnetischer Strahlung aushärtbar ist, und wobei der Haftvermittler mittels der elektromagnetischen Strahlung ausschließlich in dem mindestens einen Adhäsionsbereich ausgehärtet wird, nicht dagegen in dem mindestens einen Freibereich. In diesem Falle wird der Haftvermittler vorzugsweise ganzflächig auf die jeweilige Substratoberfläche und/oder auf die Rückseite des Applikationselements aufgebracht. Die Strukturierung des Applikationselements beim mechanischen Entfernen von der Substratoberfläche wird in diesem Falle durch die selektive Aushärtung in den Adhäsionsbereichen vorgebildet.

Der Haftvermittler wird in dieser Ausführungsvariante mittels eines beliebigen Auftragsverfahrens auf eine oder beide Oberflächen des Substrats und/oder auf die Rückseite des Applikationselements aufgebracht, beispielsweise mittels eines Druckverfahrens, insbesondere mit einem Rastertiefdruckverfahren, oder mit einem Rollenbeschichtungsverfahren oder mit einem Vorhanggießverfahren. Der Haftvermittler wird vorzugsweise ausschließlich in einem Bereich auf die Oberfläche des Substrats aufgebracht, in dem danach auch das Applikationselement auf die Oberfläche aufgeklebt wird. Grundsätzlich kann der Haftvermittler natürlich aber auch über diesen Bereich vorstehen und beispielsweise die gesamte Substratoberfläche überziehen.

Der Haftvermittler kann in Form eines Lackes, einer Tinte oder dergleichen vorliegen, zum Beispiel in Form eines auf Acrylharz basierenden Lackes. Das aufzubringende Mittel zur Erzeugung der Haftvermittlerschicht kann in Form einer Lösung des Haftvermittlers, in der dieser in einem Lösungsmittel gelöst oder suspendiert vorliegt, oder ohne Verwendung eines Lösungsmittels, d.h. in reiner Form, bereitgestellt werden. Der Haftvermittler ist vorzugsweise transparent oder transluzent. Er kann grundsätzlich auch opak sein. Er kann ungefärbt oder gefärbt sein. Der Haftvermittler ist dazu ausgebildet, unter geeigneten Bedingungen eine haftfeste Verbindung zwischen der Substratoberfläche und dem Applikationselement einzugehen, nämlich durch Bestrahlung mit elektromagnetischer Strahlung geeigneter Wellenlänge, insbesondere mit UV-Strahlung. Durch die Aktivierung beim Bestrahlen mit der elektromagnetischen Strahlung kann der Haftvermittler an den belichteten Stellen aushärten. Hierzu enthält der Haftvermittler mindestens ein Polymer oder ist der Haftvermittler durch dieses Polymer gebildet, das zunächst nicht ausgehärtet und dann unter Einwirkung der elektromagnetischen Strahlung ausgehärtet wird (Photohärtung, Photopolymerisation).

Die strukturierende Aushärtung des Haftvermittlers kann in dieser Ausführungsvariante mittels eines Schreibverfahrens oder mittels eines Projektionsverfahrens vorgenommen werden. Beim Schreibverfahren wird beispielsweise ein Laserstrahl über die auszuhärtenden Bereiche verfahren (Direct Write-Verfahren). Beim Projektionsverfahren wird das Abbild des zu bildenden Musters auf den Haftvermittler projiziert. Hierzu können übliche optische Anordnungen eingesetzt werden, beispielsweise eine Belichtung durch eine Maske, wobei als Lichtquelle wiederum ein Laser oder eine nichtkohärente Lichtquelle, wie eine Quecksilberdampflampe oder eine Xenonhochdrucklampe, eingesetzt werden. Alternativ dazu sind auch andere Projektionsverfahren bekannt, beispielsweise unter Verwendung eines Projektors mit einem DMD (Digital Micromirror Device: Flächenlichtmodulator, der aus matrixartig angeordneten Mikrospiegelaktoren mit einzeln ansteuerbar verkippbar spiegelnden Flächen besteht, die wiederum einen Lichtstrahl pixelweise und zeitweise an- oder abschalten) oder mit einem LCD (Liquid Crystal Device). Für die Aushärtung fällt die elektromagnetische Strahlung vorzugsweise von der Vorderseite des Applikationselements durch dieses hindurch auf den Haftvermittler. Nach dem Belichten und nachträglichen Entfernen einer gegebenenfalls vorhandenen Trägerfolie und Trennfolie können die zurückbleibenden Teilbereiche des Applikationselements nachgehärtet werden, ebenfalls beispielsweise mit elektromagnetischer Strahlung, insbesondere mit UV-Strahlung.

Das Applikationselement wird, gegebenenfalls unter Wärmeeinwirkung, auf die Substratoberfläche aufgedrückt, damit das Funktionselement und die Substratoberfläche über die Haftvermittlerschicht in den Adhäsionsbereichen innig miteinander in Kontakt kommen. Hierzu werden das Applikationselement und das Substrat zu einem Stapel zusammengeführt und unter Druck miteinander in Kontakt gebracht. Beispielsweise wird dieser Stapel durch einen Transferspalt zwischen zwei Walzen, beispielsweise einer Druckwalze und einer Gegendruckwalze, hindurchgeführt. Eine haftfeste (unlösbare) Verbindung des Funktionselements mit der Substratoberfläche vermittels des Haftvermittlers wird danach unter Temperaturerhöhung oder Einstrahlung von elektromagnetischer Strahlung zum Härten des Haftvermittlers hergestellt. Die Applikationselemente können bandförmig vorliegen, während das Substrat beispielsweise bogenförmig vorliegt. Diese Materialien werden zusammengeführt, wobei die Applikationselemente beispielsweise von einer Vorratshaspel abgerollt und die Trägerfolie und gegebenenfalls die Trennfolie nach dem Abziehen von dem Substrat auf einer weiteren Haspel wieder aufgerollt werden.

Die zweidimensionale Verteilung der Freibereiche und der Adhäsionsbereiche auf der Oberfläche des Substrats, d.h. die Gestaltung des Musters der ausgehärteten Bereiche des Haftvermittlers, ist beliebig. Es kann vorgesehen sein, dass sich lediglich ein Freibereich und ein Adhäsionsbereich oder ein Freibereich und mehrere Adhäsionsbereiche oder mehrere Freibereiche und ein Adhäsionsbereich oder mehrere Freibereiche und mehrere Adhäsionsbereiche auf jeweils einer der Oberflächen befinden. Die Freibereiche und die Adhäsionsbereiche liegen in einer regelmäßigen Anordnung zueinander vor. Die Adhäsionsbereiche können beispielsweise in einer hexagonalen Anordnung vorliegen, wobei die Freibereiche die Adhäsionsbereiche voneinander trennen. Die Adhäsionsbereiche können beispielsweise durch einfache geometrische Formen gebildet sein, beispielsweise durch Kreise, Quadrate, Rechtecke, Sechsecke, langgestreckte Gebilde, wie Striche, Ellipsen, und dergleichen. Adhäsionsbereiche in mehreren dieser Formen können gemeinsam vorkommen. Falls mehrere Adhäsionsbereiche vorliegen, sind diese voneinander isoliert, d.h. sie berühren sich nicht. Die Adhäsionsbereiche können gerastert oder ungerastert vorliegen. Die Adhäsionsbereiche bilden zusammen eine zweidimensionale Struktur, die beispielsweise eine Information kodiert und vorzugsweise ein individualisierendes Muster bildet. Beispielsweise kann das Muster ein oder mehrere alphanumerische oder andere Zeichen, ein Bild, ein Wappen, ein Logo oder dergleichen bilden. Die Schicht des Haftvermittlers kann auf einer oder auf beiden Oberflächen des Substrats gebildet werden und/oder auf der Rückseite des Applikationselements. Gemäß einer besonders bevorzugten Weiterbildung der vorliegenden Erfindung wird die mindestens eine Haftvermittlerschicht in Form einer individualisierenden, beispielsweise personalisierenden, Kennzeichnung ausgehärtet. Die individualisierende Kennzeichnung kann für den Inhaber des Wert- und/oder Sicherheitsdokuments beispielsweise durch Wiedergabe seiner Unterschrift oder dergleichen gebildet sein.

Die Teile des Applikationselements, die nicht über den Haftvermittler mit der Oberfläche des Substrats haftfest, d.h. unlösbar, verbunden sind, d.h. entweder überhaupt nicht über den Haftvermittler, weil sich in den Freibereichen kein Haftvermittler befindet, oder lediglich über nicht ausgehärteten Haftvermittler, werden von der Oberfläche mechanisch wieder entfernt, damit das Applikationselement schließlich strukturiert vorliegt. Für die mechanische Entfernung werden diese Teile des Applikationselements beispielsweise durch Abziehen entfernt. Hierzu liegt das Applikationselement vorzugsweise in Form eines Bandes vor, sodass das Band nach dem Verbinden der in den Adhäsionsbereichen liegenden Teile des Elements mit der Oberfläche im übrigen von der Oberfläche wieder abgehoben werden kann.

Alternativ können die Teile des Applikationselements, die sich in den Freibereichen befinden, auch mit einem Verfahren mechanisch entfernt werden, bei dem ein Werkzeug verwendet wird, das beim Verbinden mit der Oberfläche des Elements eine Haftfestigkeit zu dieser ausbildet, die geringer ist als die Haftfestigkeit des Elements zu dem Haftvermittler, sofern das Element mit der Substratoberfläche unlösbar verbunden ist, aber groß genug ist, um die dem Zerreißen des Elements entgegenwirkenden Kohäsionskräfte zu überwinden, sodass es die sich in den Freibereichen befindenden Elementteile abhebt, während die übrigen Elementteile auf der Substratoberfläche verbleiben. Hierzu wird das Werkzeug auf die Oberfläche des Elements aufgedrückt, sodass es mit diesem eine feste Verbindung eingeht, und dann von diesem wieder abgehoben.

In einer weiteren bevorzugten Weiterbildung der vorliegenden Erfindung werden die mit der mindestens einen Oberfläche des Substrats verbundenen Teile des Applikationselements mit einem Lack überzogen. Alternativ dazu kann die Oberfläche des Substrats, auf der sich das strukturierte Applikationselement befindet, auch mit einer weiteren Folie oder einem Folienverbund zusammengetragen und dann mit dieser/m fest verbunden werden, beispielsweise mittels eines Laminierverfahrens. Eine weitere Möglichkeit besteht darin, dass auf die das strukturierte Applikationselement aufweisende Oberfläche des Substrats eine weitere Folie aufkaschiert oder aufgeklebt werden kann, insbesondere ein Volumenhologramm, eine Folie mit einem Oberflächenhologramm (beispielsweise ein kinegraphisches Element) oder eine Kratzschutzfolie.

Somit kann das Substrat, das in den Adhäsionsbereichen mit Applikationselementstrukturen bzw. Funktionselementstrukturen versehen ist, anschließend zusätzlich mit einer außenliegenden Schutz- oder Decklackschicht versehen werden, um das fertige Wert- und/oder Sicherheitsprodukt herzustellen und diesem die erforderliche Abrieb- und Kratzfestigkeit zu verleihen und das darunter liegende erfindungsgemäße Sicherheitsmerkmal gegen einen Zugriff von außen zu schützen. Hierzu können alle üblichen Lacke verwendet werden, die die notwendige Abrieb- und Kratzfestigkeit aufweisen. Der Schutzlack soll eine Schutzschicht bilden, die das darunter liegende Sicherheitsmerkmal ohne weiteres erkennen lässt. Hierzu ist der Schutzlack vorzugsweise transparent. Er kann gegebenenfalls auch transluzent sein. Die Schutzlackschicht sollte ferner ungefärbt sein. Sie kann jedoch auch eine Färbung im sichtbaren Spektralbereich aufweisen. Ferner kann die Schutzlackschicht in anderen Spektralbereichen als dem sichtbaren Spektralbereich (beispielsweise IR-, UV-Spektralbereich) transparent oder opak sein. Der Schutzlack kann die Struktur des erfindungsgemäßen Sicherheitsmerkmals einschließen, indem er in die Zwischenräume zwischen den Funktionselementstrukturen eindringt und diese ausfüllt und beim Aufbringen bis zur Substratoberfläche vordringt, wenn der Haftvermittler nur in der Adhäsionsbereichen auf die Substratoberfläche aufgebracht worden ist, oder bis zum Haftvermittler, wenn dieser vollflächig aufgebracht worden ist. Da das Muster des erfindungsgemäßen Sicherheitsmerkmals somit in die Schutzlackschicht hineinragt, wird diese durch das Sicherheitsmerkmal ihrerseits individualisiert, insbesondere personalisiert, und damit ebenfalls gegen Fälschung und Verfälschung gesichert.

Falls der Haftvermittler transparent oder transluzent ist und das applizierte Sicherheitselement mit der außenliegenden Schutzlackschicht überzogen ist, ergibt sich eine als Sicherheitsmerkmal verwendete weitere bevorzugte Ausführungsform der vorliegenden Erfindung, da die Funktionselementstrukturen in diesem Falle innerhalb der Schicht zu schweben scheinen, denn diese Strukturen ruhen zum einen auf den Haftvermittlerstrukturen und sind zum anderen von der Schutzlackschicht überzogen. Dieser optische Effekt stellt sich insbesondere dann ein, wenn beide Schichten transparent sind. Ganz besonders bevorzugt ist es, wenn die Haftvermittlerschicht und die Schutzlackschicht denselben Brechungsindex aufweisen, sodass eine Grenzfläche zwischen den beiden Schichten in den Freibereichen nicht erkennbar ist. In diesem Falle bildet sich ein optisch einheitlicher (monolithischer) Lackblock aus, der die Funktionselementstrukturen allseitig einschließt. Vorzugsweise sind der Haftvermittler und der Schutzlack aus demselben Material gebildet.

In noch einer weiteren bevorzugten Weiterbildung der vorliegenden Erfindung befindet sich an einer der Oberflächen des Substrats ein weiteres Sicherheitsmerkmal, beispielsweise ein mittels eines Druckverfahrens erzeugtes Sicherheitsmerkmal. Die Schicht des Haftvermittlers wird zumindest teilweise auf dem weiteren Sicherheitsmerkmal erzeugt, und das Applikationselement wird damit ebenfalls zumindest teilweise auf dieses weitere Sicherheitsmerkmal aufgebracht. Damit wird dieses weitere Sicherheitsmerkmal gegen Fälschung und Verfälschung geschützt. Das weitere Sicherheitsmerkmal kann beispielsweise das gedruckte Gesichtsbild des Inhabers des Wert- und/oder Sicherheitsdokuments sein. Ferner kann das Applikationselement bzw. Funktionselement auch auf einen nicht individualisierenden Sicherheitsdruck, beispielsweise Guillochen oder einen Irisdruck, appliziert sein. In diesem Falle ist dieses Sicherheitsmerkmal ausschließlich in den von dem Applikations- bzw. Funktionselement freigehaltenen Freibereichen von einem Betrachter wahrnehmbar. Dadurch ist dieses weitere Sicherheitsmerkmal individualisierbar.

In einer weiteren bevorzugten Weiterbildung der vorliegenden Erfindung ist das Applikationselement in einem Oberflächenbereich auf einer Oberfläche des Substrats aufgebracht, in dem eine die Sichtbarkeit des Musters des Applikationselements nach dem mechanischen Entfernen verbessernde Oberflächenbeschaffenheit vorliegt. Diese verbesserte Sichtbarkeit kann beispielsweise durch eine Schicht auf der Oberfläche erreicht werden, die eine Kontrastfarbe oder aufhellende Farbe zu dem Applikationselement aufweist. Die Schicht kann beispielsweise im sichtbaren Spektralbereich lumineszierend (fluoreszierend, phosphoreszierend) sein, beispielsweise durch Photo- oder Elektrolumineszenz. Hierzu können übliche im sichtbaren Spektralbereich absorbierende Farben zur Erhöhung des Kontrastes bzw. Farben verwendet werden, die Lumineszenzstoffe enthalten. Die Kontrastfarbe für ein metallisch glänzendes Applikationselement kann beispielsweise dunkel, insbesondere schwarz, sein. Diese Schicht kann sich ausschließlich in einem Bereich befinden, der von dem Applikationselement eingenommen wird oder auch größer sein, sodass die Schicht entweder nur in den Freibereichen sichtbar ist oder auch seitlich vom Applikationselement vorsteht. Die Schicht kann gedruckt sein. Sie kann den Schichtbereich vollständig ausfüllen oder selbst in Form eines Musters vorliegen, beispielsweise mit einem ausschließlich die Freibereiche füllenden Muster oder in einem nicht mit den Frei- und Adhäsionsbereichen passergenau angeordneten und/oder gestalteten weiteren Muster. In dieser Ausführungsform wird die Haftvermittlerschicht auf der genannten Schicht erzeugt. Durch den erhöhten Kontrast, der sich durch diese die Sichtbarkeit des Musters erhöhende zusätzliche Schicht ergibt, ist die regelmäßige Randformung durch das Durchtrennen des Applikationselements in den Dünnbereichen leichter erkennbar.

In einer weiteren bevorzugten Weiterbildung der vorliegenden Erfindung kann ferner vorgesehen sein, dass das Substrat bzw. das Wert- und/oder Sicherheitsdokument zumindest in dem Bereich vollständig transparent ist, in dem die Haftvermittlerschicht und das Applikationselement auf eine Oberfläche aufgebracht sind. Dadurch ist das Muster des Applikationselements auch von der Rückseite des Substrats bzw. Dokuments sichtbar. Auch in dieser Weiterbildung ist die spezielle erfindungsgemäße Randformung leichter erkennbar. Beispielsweise kann sich in diesem Bereich ein Fenster in dem ansonsten opaken Substrat bzw. Dokument befinden.

Das mindestens eine Substrat, auf dessen mindestens einer Oberfläche sich das erfindungsgemäße Sicherheitsmerkmal befindet, kann durch jeweils eine Produktlage oder durch das Produkt selbst gebildet sein. Alternativ kann auch ein Vorprodukt für das Wert- und/oder Sicherheitsprodukt, das noch nicht alle Produktlagen, jedoch die meisten der Sicherheitsmerkmale des Dokuments aufweist, als Substrat verwendet werden.

Das Wert- und/oder Sicherheitsprodukt kann zusätzlich zu dem erfindungsgemäß hergestellten Sicherheitsmerkmal mindestens ein weiteres Sicherheitsmerkmal aufweisen, das entweder individualisierend oder nicht individualisierend ist. Als weitere Sicherheitsmerkmale kommen Guillochen, Wasserzeichen, Prägedrucke, ein Sicherheitsfaden, Mikroschrift, Kippbilder, Durchlichtpasser und dergleichen in Betracht. Ferner kann das Dokument auch elektronische Komponenten aufweisen, beispielsweise einen RFID-Schaltkreis mit Antenne und RFID-Mikrochip, elektronische Anzeigeelemente, LEDs, berührungsempfindliche Sensoren und dergleichen. Die elektronischen Komponenten können beispielsweise zwischen zwei opaken Lagen des Dokuments versteckt angeordnet sein.

Zur näheren Erläuterung der vorliegenden Erfindung dienen die nachfolgend beschriebenen Figuren:
- Fig. 1: zeigt ein erfindungsgemäßes Wert- und/oder Sicherheitsdokument in Form einer Identitätskarte, die ein mit dem erfindungsgemäßen Verfahren hergestelltes Sicherheitsmerkmal aufweist, in einer isometrischen Darstellung;
- Fig. 2: zeigt eine erste Ausführungsvariante des erfindungsgemäßen Verfahrens in einer schematischen Darstellung in einer Schnittansicht;
- Fig. 3: zeigt eine zweite Ausführungsvariante des erfindungsgemäßen Verfahrens in einer schematischen Darstellung in einer Schnittansicht;
- Fig. 4: zeigt das Abziehen der Trägerlage von dem Substrat in einer schematischen isometrischen Darstellung;
- Fig. 5: zeigt den Verfahrensablauf in einer ersten Ausführungsvariante beim Aufbringen eines mit Dünnbereichen versehenen Applikationselements auf ein Substrat in einer schematischen Darstellung in einer Schnittansicht bzw. in einer schematischen Draufsicht (Fig. 5D);
- Fig. 6: zeigt eine Anordnung von dünnen Grabenbereichen (Dünnbereichen) in einem Applikationselement in wabenartiger Form in einer schematischen Draufsicht;
- Fig. 7: zeigt den Verfahrensablauf in einer zweiten Ausführungsvariante beim Aufbringen eines mit Dünnbereichen versehenen Applikationselements auf ein Substrat in einer schematischen Darstellung in einer Schnittansicht;
- Fig. 8: zeigt einen Vergleich der Kontaktflächen einer Kleberstruktur mit einem Applikationselement in einer schematischen Darstellung in einer Schnittansicht; (A) ohne Dünnbereiche (nicht erfindungsgemäß); (B) mit Dünnbereichen (erfindungsgemäß);
- Fig. 9: zeigt den Verfahrensablauf in einer dritten Ausführungsvariante beim Aufbringen eines mit Dünnbereichen versehenen Applikationselements auf ein Substrat in einer schematischen Darstellung in einer Schnittansicht;
- Fig. 10: zeigt den Verfahrensablauf in einer vierten Ausführungsvariante beim Aufbringen eines mit Dünnbereichen versehenen Applikationselements auf ein Substrat in einer schematischen isometrischen Darstellung;
- Fig. 11: zeigt einen Vergleich der Randstrukturen eines Musters in einer schematischen Darstellung in einer Seitenansicht; (A) ohne Dünnbereiche (nicht erfindungsgemäß); (B) mit Dünnbereichen (erfindungsgemäß), wobei zusätzlich jeweils vergrößerte Teilansichten der Randbereiche des Adhäsionsbereiches wiedergegeben sind.

In den Figuren bezeichnen gleiche Bezugszeichen Elemente mit derselben Funktion oder dieselben Elemente. Die einzelnen Elemente sind nicht maßstabsgetreu zueinander dargestellt.

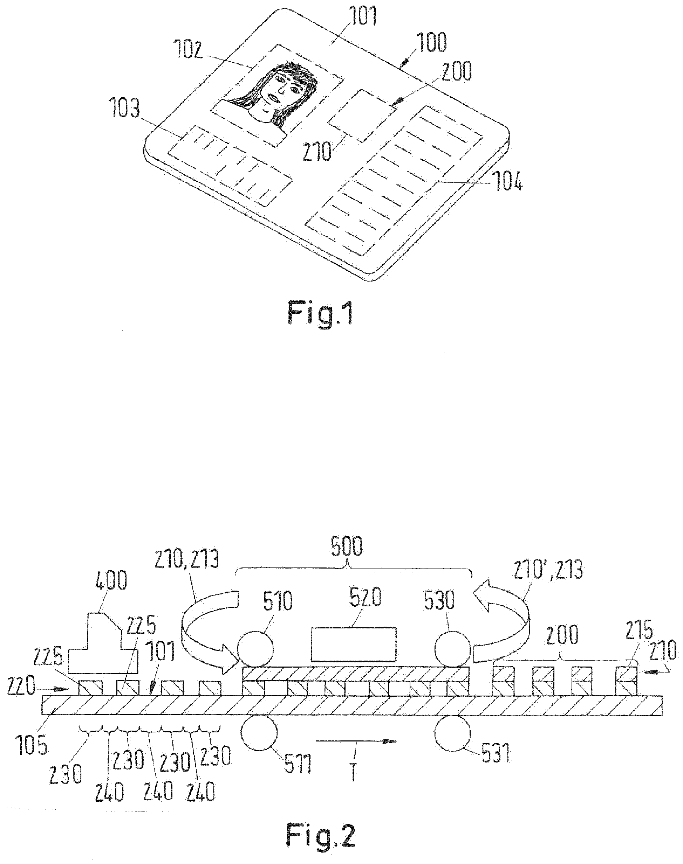

Ein erfindungsgemäßes Wert- und/oder Sicherheitsprodukt in Form einer Identitätskarte 100 ist in Fig. 1 dargestellt. Die Identitätskarte kann beispielsweise eine Ausweiskarte in Format ID 1 gemäß ISO 7810 sein und in Form eines Laminates vorliegen, das aus Polycarbonatfolien durch Laminieren hergestellt worden ist. Die Identitätskarte weist eine Vorderseite 101 und eine Rückseite (nicht dargestellt) auf. Auf der Vorderseite befinden sich mehrere Sicherheitsmerkmale, nämlich ein gedrucktes Passphoto 102 der Person, der die Identitätskarte zugeordnet ist sowie zwei Felder 103, 104, in denen Daten dieser Person, beispielsweise der Name, die Adresse, das Geburtsdatum und der Geburtsort sowie gegebenenfalls weitere Daten, in Klarschrift oder verschlüsselt, in Form von alphanumerischen Zeichen wiedergegeben sind. Das Passphoto ebenso wie die weiteren Daten dieser Person sind auf eine der Lagen der Identitätskarte gedruckt. Diese Sicherheitsmerkmale sind dann durch Überziehen der Karte mit einem kratzfesten Schutzlack gegen Manipulation geschützt. Der Schutzlack ist transparent. Weitere Lagen des Laminats können ebenfalls transparent oder auch opak sein.

Auf der Vorderseite der Identitätskarte 100 ist ferner ein mit dem erfindungsgemäßen Verfahren hergestelltes Sicherheitsmerkmal 200 angebracht. Es handelt sich um ein auf eine Lage des Laminats aufkaschiertes Applikationselement 210 in Form eines Sicherheitselements. Dieses Sicherheitselement kann beispielsweise ein Echtheitsmerkmal in Form eines mittels einer OVI-Farbe auf eine Trägerlage aufgedrucktes Symbol sein, das beispielsweise für die ausgebende Stelle der Identitätskarte kodiert und das ein OVD darstellt. Das Sicherheitselement ist mit einem Kaltfolienprägeverfahren auf das Substrat 105 der Karte aufkaschiert, wobei zusätzlich ein personalisierendes Merkmal in dieses Applikationselement eingeprägt ist. Dieses personalisierende Merkmal kann beispielsweise durch eine alphanumerische Zeichenfolge gebildet sein, die für ein Identitätszeichen des Karteninhabers codiert. Diese alphanumerische Zeichenfolge kann beispielsweise durch Ausnehmungen in dem OVI-Element gebildet sein.

Um das Applikationselement 210 zu personalisieren, kann beispielsweise das in Fig. 2 schematisch dargestellte Verfahren angewendet werden (erste Verfahrensvariante). Die Darstellung zeigt das Verfahren in den einzelnen Schritten anhand eines in der Transportrichtung T fortschreitenden Bandes des Substrats 105, im vorliegenden Falle einer Polycarbonatfolie, auf der das Applikationselement appliziert werden soll. Dieses Band wird von links nach rechts befördert. Anstelle eines Substratbandes kann natürlich auch jedes beliebige andere Format für ein Substrat verwendet werden, beispielsweise ein Substratbogen. Auf das Substrat werden nacheinander Applikationselemente appliziert, die ebenfalls in Form eines Bandes bereitgestellt werden. Dieses Band ist durch ein Trägerband 213 und darauf aufgebrachte Funktionselemente 210 gebildet, die zusammen mit entsprechenden Trägerbandabschnitten jeweils Applikationselemente bilden (hier nur schematisch angedeutet). Das Trägerband ist nicht separat dargestellt.

In einem ersten Schritt wird die Polycarbonatfolie 105 von links zu einem Druckwerk 400 zugeliefert. Das Druckwerk ist im vorliegenden Falle ein Tintenstrahldrucker, von dem lediglich ein einziger Druckkopf gezeigt ist. Der Drucker appliziert Klebermaterial 220 (Haftvermittler) in einer strukturierten Anordnung in Form von Kleberstrukturen 225 auf die Substratoberfläche 101, sodass die Kleberverteilung auf der Substratoberfläche dem gewünschten Muster der gewünschten alphanumerischen Zeichenfolge entspricht. Für die Erzeugung der vorstehend beispielhaft genannten alphanumerischen Zeichenfolge werden die Kleberstrukturen in Form eines Negativs dieser Zeichenfolge appliziert, d.h. die Zeichenfolge wird in dem ansonsten flächig aufgebrachten Kleber ausgespart. Das Klebermaterial ist ein Holtmelt-Kleber. Da der Drucker für die individuelle Mustererzeugung ansteuerbar ist, kann sich die Zeichenfolge auf aufeinander folgenden Substraten unterscheiden, beispielsweise A000000I, O123456C, N543987Z usw. Damit können den Karteninhabern zugeordnete individuelle Zeichenfolgen erzeugt werden. Das Klebermaterial wird ausschließlich in den Adhäsionsbereichen 230 auf die Substratoberfläche 101 aufgebracht. Dazwischen befinden sich Freibereiche 240.

Nach dem Passieren des Druckwerkes 400 wird das Substrat 105 einem Kaschierwerk 500 zugeführt, in dem es zunächst einen Spalt zwischen einer Anpressrolle 510 und einer ersten Gegendruckrolle 511 passiert. An dieser Stelle wird das Substrat mit einzelnen Applikationselementen 210 in Kontakt gebracht (nicht dargestellt). Diese Elemente werden in den Adhäsionsbereichen 230 mit den Kleberstrukturen 225 auf der Substratoberfläche 101 in Kontakt gebracht und durch den mittels der Anpressrolle 510 und der ersten Gegendruckrolle 511 erzeugten Anpressdruck mit diesen verbunden.

Ein IR-Strahler 520 erzeugt dann durch Wärmezufuhr in dem Verbund aus Substrat 105, Kleberstrukturen 225 und Applikationselementen 210 eine Temperaturerhöhung, sodass der Kleber mit den Applikationselementen eine Verbindung eingeht und dabei aushärtet. Damit wird eine feste (unlösbare) Verbindung des Klebers zum einen mit der Substratoberfläche 101 und zum anderen mit den Applikationselementen hergestellt.

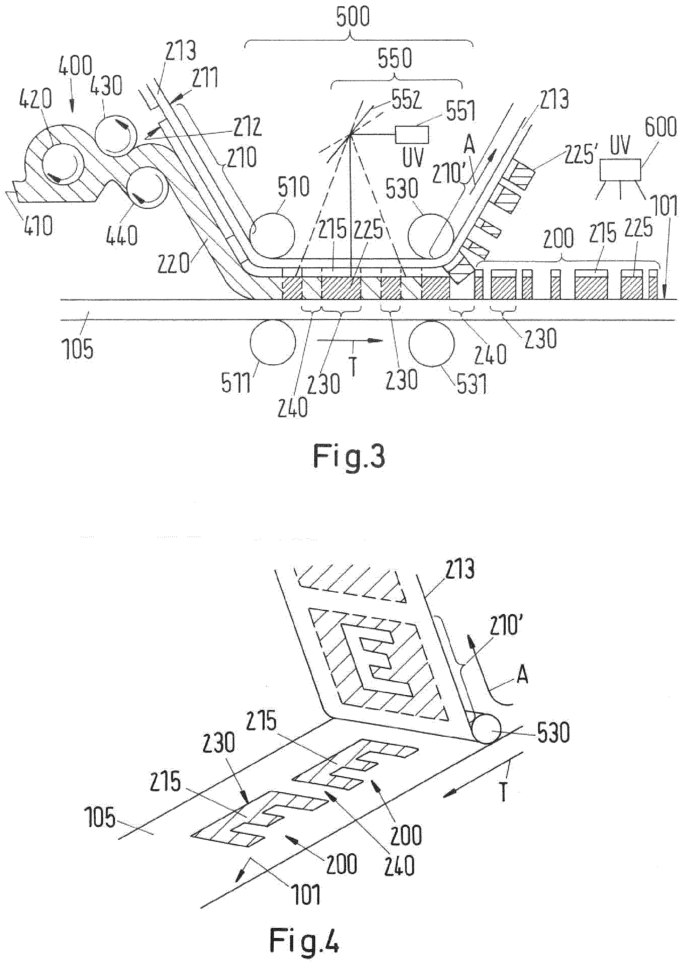

Nach dem Passieren des IR-Strahlers passiert der Verbund aus Substrat 105, Trägerfolie 213 und den Applikationselementen 210 ferner eine Abzugsrolle 530 und ein zweite Gegendruckrolle 531. An diesen Rollen werden die Trägerfolie (und gegebenenfalls eine Trennfolie) mit den daran haftenden Resten 210' des Applikationselements, die sich in den Freibereichen 240 zwischen den Kleberstrukturen 225 befunden haben und daher mit dem Kleber 220 nicht verbunden sind, von dem Substrat wieder abgelöst und von diesem abgezogen (Fig. 4). Auf der Substratoberfläche 101 verbleiben die Applikationselementstrukturen 215, die in den Adhäsionsbereichen 230, in denen sich die Kleberstrukturen 225 auf der Substratoberfläche 101 befinden, mit der Substratoberfläche fest verbunden sind.

Nach dem Abziehen der Trägerfolie 213 (und der Trennfolie) in der Abzugsrichtung A mit den anhaftenden Resten 210' des Funktionselements bleibt das strukturierte und individualisierte Sicherheitsmerkmal 200 auf der Substratoberfläche 101 zurück (Fig. 4). Dieses ist nun durch die dem Karteninhaber zugeordnete Zeichenfolge strukturiert.

Dieses Verfahren kann auch abgewandelt durchgeführt werden, indem der Kleber 220 nicht auf die Substratoberfläche 101 sondern wie im Falle der nachfolgend beschriebenen zweiten Verfahrensvariante auf die Rückseite der Trägerfolie 213 aufgebracht wird.

Eine zweite Verfahrensvariante des erfindungsgemäßen Herstellungsverfahrens für das Sicherheitsmerkmal 200 ist schematisch in Fig. 3 dargestellt. Die Darstellung zeigt das Verfahren in den einzelnen Schritten wiederum anhand des in der Transportrichtung T fortschreitenden Bandes des Substrats 105, das von links nach rechts befördert wird. In diesem Falle sind das Trägerband 213 und darauf angebrachte Funktionselemente separat dargestellt. Jedes Funktionselement bildet zusammen mit einem entsprechenden Teil des Trägerbandes ein Applikationselement 210. Das Band mit den darauf angebrachten Funktionselementen weist eine Oberseite 211 und eine Rückseite 212 auf. Im Unterschied zu der ersten Verfahrensvariante wird die Schicht des Klebers 220 nicht auf der Substratoberfläche 101 sondern auf der Rückseite 212 des Bandes sowie im vorliegenden Falle vollflächig gebildet.

In einem ersten Schritt wird das mit den Funktionselementen versehene Band 213 von links oben kommend zu einem Druckwerk 400 zugeliefert. Das Druckwerk ist im vorliegenden Falle eine Rollenbeschichtungsvorrichtung mit einem ein UV-härtbares Klebermaterial 220 enthaltenden Reservoir 410, zwei Transferrollen 420, 430, die das Klebermaterial aus dem Reservoir entnehmen, und einer Auftragsrolle 440, die das Klebermaterial auf die Applikationselemente vollflächig übertragen. Die Auftragsrolle appliziert das Klebermaterial vollflächig auf die Rückseite 212 des Bandes 213 mit den Funktionselementen.

Das Substrat 105 wird nach dem Passieren des Druckwerkes 400 wiederum einem Kaschierwerk 500 zugeführt, in dem es zunächst den Spalt zwischen der Anpressrolle 510 und der ersten Gegendruckrolle 511 passiert. An dieser Stelle wird das Substrat mit den mit dem Klebermaterial beschichteten Applikationselementen 210 in Kontakt gebracht. Hierzu üben die Anpressrolle 510 und die erste Gegendruckrolle 511 einen Anpressdruck auf den Verbund aus.

Mittels einer Belichtungsvorrichtung 550 in dem Kaschierwerk 500, die durch einen UV-Laser 551, beispielsweise einen Excimerlaser, und einen ansteuerbaren Spiegel 552 für die Laserstrahlsteuerung gebildet ist, wird der Laserstrahl auf den Kleberauftrag 220 gerichtet. Durch die UV-Strahlung wird der Kleberauftrag strukturiert ausgehärtet und zwar unter Bildung von ausgehärteten Kleberstrukturen 225, die sich in Adhäsionsbereichen 230 befinden, wobei sich dazwischen liegend in Freibereichen 240 nicht ausgehärteter Kleber befindet. Da die Belichtungsvorrichtung für die individuelle Mustererzeugung ansteuerbar ist, kann sich die Zeichenfolge auf aufeinander folgenden Substraten unterscheiden, beispielsweise A000000I, O123456C, N543987Z usw. Damit können den Karteninhabern zugeordnete individuelle Zeichenfolgen in Form der ausgehärteten Kleberstrukturen erzeugt werden, auf denen die Funktionselemente individualisiert strukturiert sind.

In den Adhäsionsbereichen 230, in denen das Klebermaterial 220 ausgehärtet ist, verbinden sich die Kleberstrukturen 225 mit den Applikationselementen 210 haftfest. Dort entstehen Applikationselementstrukturen 215. Dagegen findet keine derartige haftfeste Verbindung in den Freibereichen 240 statt, in denen das Klebermaterial nicht ausgehärtet ist.

Nach dem Passieren der Belichtungsvorrichtung 550 passiert der Verbund aus Substrat 105, Trägerfolie 213, den Applikationselementen 210 sowie den Kleberstrukturen 225 ferner eine Abzugsrolle 530 und ein zweite Gegendruckrolle 531. An diesen Rollen werden die Trägerfolie (und gegebenenfalls eine Trennfolie) mit den daran haftenden Resten 210' des Funktionselements, die sich in den Freibereichen 240 zwischen den ausgehärteten Kleberstrukturen 225 befunden haben und daher zusammen mit dem Klebermaterial 220 mit der Substratoberfläche 101 nicht haftfest verbunden sind, von dem Substrat wieder abgelöst und von diesem abgezogen (Fig. 4). Auf der Substratoberfläche 101 verbleiben die Applikationselementstrukturen 215, die in den Adhäsionsbereichen 230 über die Kleberstrukturen 225 mit der Substratoberfläche haftfest verbunden sind.

Nach dem Abziehen der Trägerfolie 213 (und der Trennfolie) in der Abzugsrichtung A mit den nicht ausgehärteten Kleberresten 225' und den anhaftenden Resten 210' des Applikationselements bleibt das strukturierte und individualisierte Sicherheitsmerkmal 200 auf der Substratoberfläche 101 zurück (Fig. 4). Dieses ist nun durch die dem Karteninhaber zugeordnete Zeichenfolge strukturiert.

Um die Kleberstrukturen 225 auf der Substratoberfläche 101 vollständig auszuhärten, wird dem Kaschierwerk 500 zusätzlich noch eine UV-Nachhärtevorrichtung 600, die eine UV-Lichtquelle aufweist, nachgeschaltet.

Um das mit einem der in Fig. 2, 3 gezeigten Verfahren gebildete Sicherheitsmerkmal 200 gegen unbefugte Manipulation zu schützen, kann das Substrat 105 anschließend noch mit einem Schutzlack überzogen werden. Dieser Verfahrensschritt ist nicht dargestellt.

Dieses Verfahren kann auch abgewandelt durchgeführt werden, indem das Klebermaterial 220 nicht auf die Rückseite 212 des Bandes 213 sondern wie im Falle der ersten Verfahrensvariante auf die Substratoberfläche 101 aufgebracht wird.

Damit das Abziehen der nicht mit den Kleberstrukturen 225 haftfest verbundenen Applikationselementstrukturen 215 problemlos und insbesondere mit guter Kantenschärfe gelingt, werden die Applikationselemente 210 in erfindungsgemäßer Art und Weise pixeliert, d.h. mit Dünnbereichen versehen.

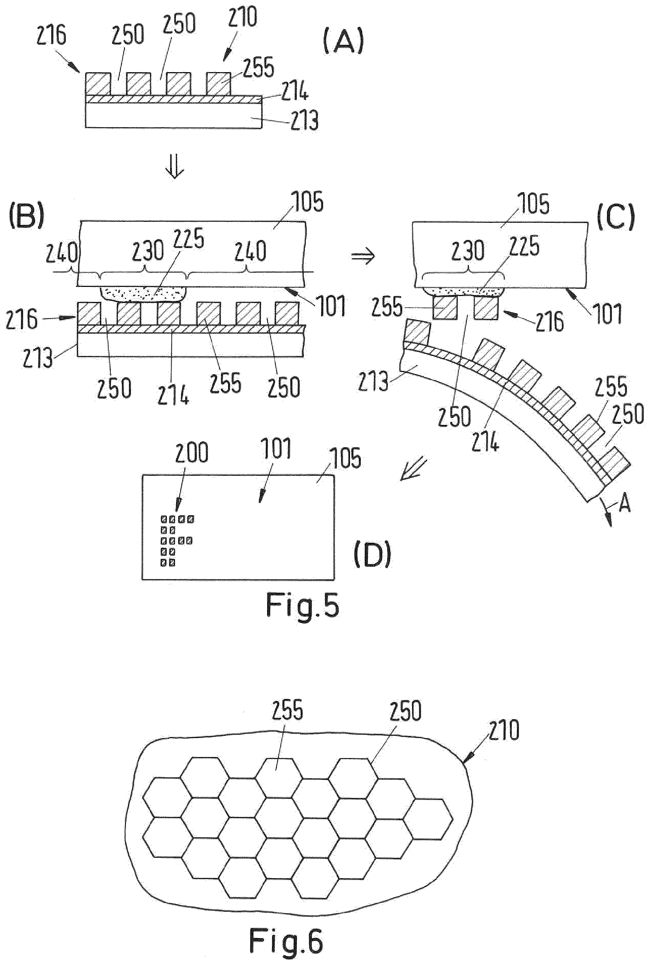

In einer ersten Ausführungsvariante ist ein Applikationselement 210 im Ausschnitt dargestellt (Fig. 5A). Das Applikationselement weist ein von einer Trägerlage 213 getragenes Funktionselement 216 auf. Zwischen der Trägerlage und dem Funktionselement befindet sich ferner eine Trennlage 214. Die Trägerlage kann beispielsweise eine Polyethylenterephthalatfolie und die Trennlage eine Siliconschicht sein. Das Funktionselement kann im vorliegenden Falle beispielsweise durch ein mittels OVI-Farbe erzeugtes Sicherheitsmerkmal gebildet sein, das lediglich die Echtheit eines damit versehenen Dokuments garantieren soll. Die Trägerlage und die Trennlage können in Form eines Bandes ausgebildet sein und mehrere dieser Funktionselemente tragen. Jedes Funktionselement bildet zusammen mit einem entsprechenden Trägerlagen- und Trennlagenabschnitt ein Applikationselement.

Damit dieses Funktionselement 216 möglichst präzise in der Musterstruktur auf das Substrat 105 übertragen wird, befinden sich Dünnbereiche 250 in dem Funktionselement. Die Dünnbereiche definieren zwischen den Dünnbereichen liegende Rasterzellen 255. In diesem Falle bilden die Dünnbereiche und Rasterzellen eine wabenförmige Struktur schmaler Gräben. Die Dünnbereiche durchdringen das Funktionselement vollständig, greifen aber nicht in die Trenn- und die Trägerlage hinein (Fig. 5A). Die Dünnbereiche sind in dem Funktionselement in einer regelmäßigen Anordnung gebildet, nämlich in einer zweidimensionalen gerasterten Anordnung. Ein mögliches Beispiel ist in Fig. 6 gezeigt. In diesem Beispiel sind der Abstand benachbarter Dünnbereiche, die Größe und die Form der Rasterzellen konstant. Die Dünnbereiche können beispielsweise bereits beim Herstellen der Funktions-, z.B. einer OVI-Schicht, erzeugt werden. Hierzu kann die OVI-Schicht mit einem geeigneten Druckverfahren auf der Trennlage 214 erzeugt werden, wobei die Dünnbereiche beim Drucken freigelassen werden. Die Rasterzellen bilden die OVI-Schicht.

Das Funktionselement 216 wird zusammen mit der Trägerlage 213 und der Trennlage 214 mittels eines der beiden Verfahren, die in Fig. 2, 3 dargestellt sind, mit dem Substrat 105 verbunden, sodass das Funktionselement in einer strukturierten Anordnung auf die Substratoberfläche 101 übertragen wird. In der in Fig. 5B gezeigten Anordnung ist das eine Kleberstruktur 225 bildende Klebermaterial in einem Adhäsionsbereich 230 auf die Substratoberfläche strukturiert aufgebracht, und das Applikationselement 210 ist mit seinem Funktionselement 216 mit dem Klebermaterial in Kontakt gebracht. Neben dem Adhäsionsbereich befinden sich kleberfreie Freibereiche 240. Dies entspricht der Strukturierungsmethode gemäß Fig. 2. Alternativ kann das Klebermaterial auch strukturiert auf das Funktionselement aufgebracht werden, oder das Klebermaterial wird vollflächig auf die Substratoberfläche oder, in noch einer weiteren Alternative, vollflächig auf das Funktionselement aufgebracht. Letztere Alternative entspricht der Strukturierungsmethode von Fig. 3. Bei vollflächiger Aufbringung des Klebermaterials wird dieses nachträglich strukturiert ausgehärtet, beispielsweise durch partielles Bestrahlen mit UV-Strahlung.

In Fig. 5C ist ferner dargestellt, dass die Kleberstruktur 225 mit zwei Rasterzellen 255 mit dazwischen liegenden Dünnbereichen 250 des Funktionselements 216 in Kontakt gekommen ist. Nachdem die Kleberstrukturen ausgehärtet sind, beispielsweise durch Wärmezufuhr, können die Trägerlage 213 und die Trennlage 214 zusammen mit den nicht mit Kleberstrukturen in Kontakt gekommenen und daher nicht mit der Substratoberfläche 101 unlösbar verbundenen Rasterzellen des Funktionselements von der Substratoberfläche abgezogen werden (Abzugsrichtung A).

Somit haften lediglich die Teile des Funktionselements 216 auf der Substratoberfläche 101, die sich in dem Adhäsionsbereich 230 befinden und die dem zu bildenden Muster entsprechen, im vorliegenden Fall einem Punktmuster, das zusammen den Buchstaben ,F' ergibt (Fig. 5D). Die Punkte dieses Buchstabens werden durch die OVI-Farbe erzeugt und bilden ein erfindungsgemäß hergestelltes Sicherheitsmerkmal 200.

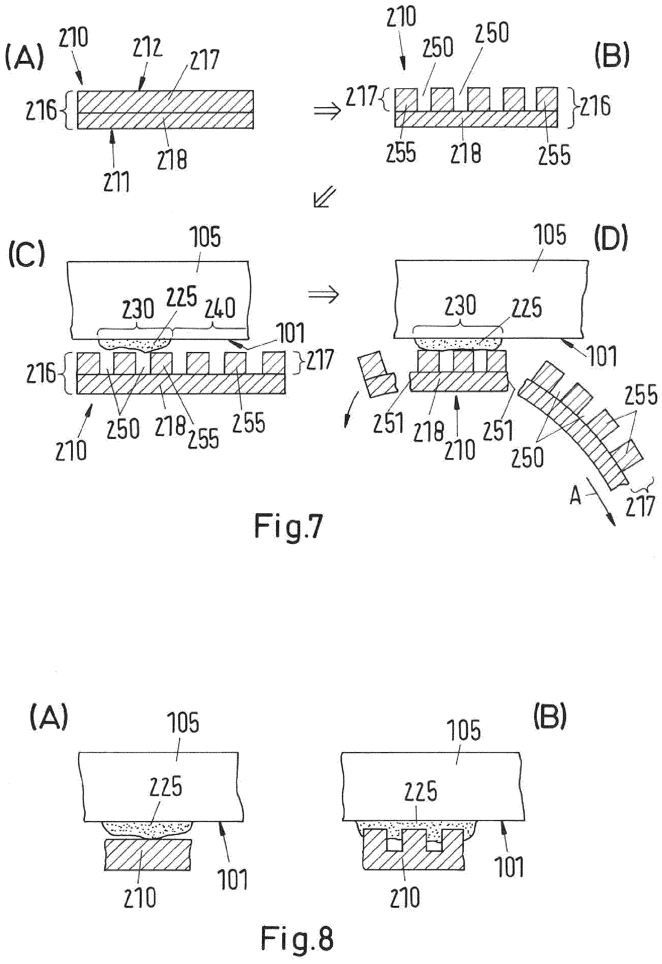

In einer zweiten Ausführungsvariante wird ein Applikationselement 210, das keine Träger- und keine Trennlage aufweist, auf ein Substrat 105 übertragen und dabei erfindungsgemäß strukturiert (Fig. 7). Das Applikationselement ist in diesem Falle daher das Funktionselement 216. Die Dünnbereiche 250 in dem Applikationselement werden in diesem Falle erst nach der Herstellung des Applikationselements gebildet. Beispielsweise ist das Applikationselement ein Hologramm mit einer oberflächlich angeordneten Metallschicht 217. Das Hologramm weist an der Vorderseite 211 eine Basisschicht 218 aus einem transparenten Polymer, beispielsweise aus Polycarbonat, und an der Rückseite 212 die Metallschicht auf. Die Metallschicht ist reliefförmig geformt (Fig. 7A, Reliefform der Metallschicht nicht dargestellt).

In dieser Metallschicht 217 werden die Dünnbereiche 250 gebildet, indem die Metallschicht partiell chemisch abgelöst wird. Dabei entstehen erhabene Metallbereiche 255, die die Rasterzellen bilden. Hierzu können herkömmliche Verfahren zum chemischen Ätzen eingesetzt werden. Wenn die Metallschicht eine Aluminiumschicht ist, kann die chemische Ätzlösung eine wässrige alkalische Lösung sein. Damit die Metallschicht nur in den Dünnbereichen entfernt wird, kann beispielsweise eine Ätzmaske verwendet werden. Hierzu wird beispielsweise ein gegen die alkalische Ätzlösung resistenter Lack auf die Metallschicht ausschließlich in den Bereichen der Rasterzellen, nicht aber in den zu ätzenden Bereichen, aufgebracht, beispielsweise mittels Siebdruck. Anschließend kann die Aluminiumschicht partiell abgelöst werden, sodass die Dünnbereiche entstehen. Die Dünnbereiche und Rasterzellen können in einem Raster wie in Fig. 6 gezeigt vorliegen. Die Ätzmaske wird danach wieder entfernt, beispielsweise mit einem Lösungsmittel. Es entsteht das Applikationselement 210 mit den Dünnbereichen und erhabenen Metallbereichen (Fig. 7B).

Anschließend wird das derart präparierte Applikationselement 210 mit einem in Adhäsionsbereichen 230 mit Kleberstrukturen 225 versehenen Substrat 105 in Kontakt gebracht, die in der zu bildenden Musterstruktur angeordnet sind (Fig. 7C). Auch in diesem Falle sind die weiteren Strukturierungsmöglichkeiten wie in der ersten Ausführungsvariante anwendbar. Nach dem Aushärten der Kleberstrukturen wird das Applikationselement in der Abzugsrichtung A von der Substratoberfläche 101 abgezogen. Dabei reißt das Applikationselement an den geschwächten Stellen 251 in den Dünnbereichen 250, sodass ausschließlich die Rasterzellen 255 des Applikationselements, die sich in den Adhäsionsbereichen befinden, auf dem Substrat zurückbleiben und die restlichen Teile des Applikationselements abgezogen werden. (Fig. 7D).

Zur Veranschaulichung der verbesserten Haftfestigkeit von Teilen eines mit Dünnbereichen 250 versehenen Applikationselements 210 auf einer Substratoberfläche 101 gegenüber der Haftfestigkeit von nicht mit derartigen Dünnbereichen versehenen Applikationselementteilen wird auf Fig. 8 verwiesen. Der Vergleich zeigt, dass die Kleberstrukturen 225 beim Zusammenpressen des Applikationselements mit dem Substrat 105 zum Teil auch in die Vertiefungen in den Dünnbereichen eindringen. Dadurch wird die Kontaktfläche zwischen den Kleberstrukturen und den Applikationselementstrukturen gegenüber einer keine Vertiefungen aufweisenden Kontaktfläche vergrößert, sodass die Haftfestigkeit erhöht ist.

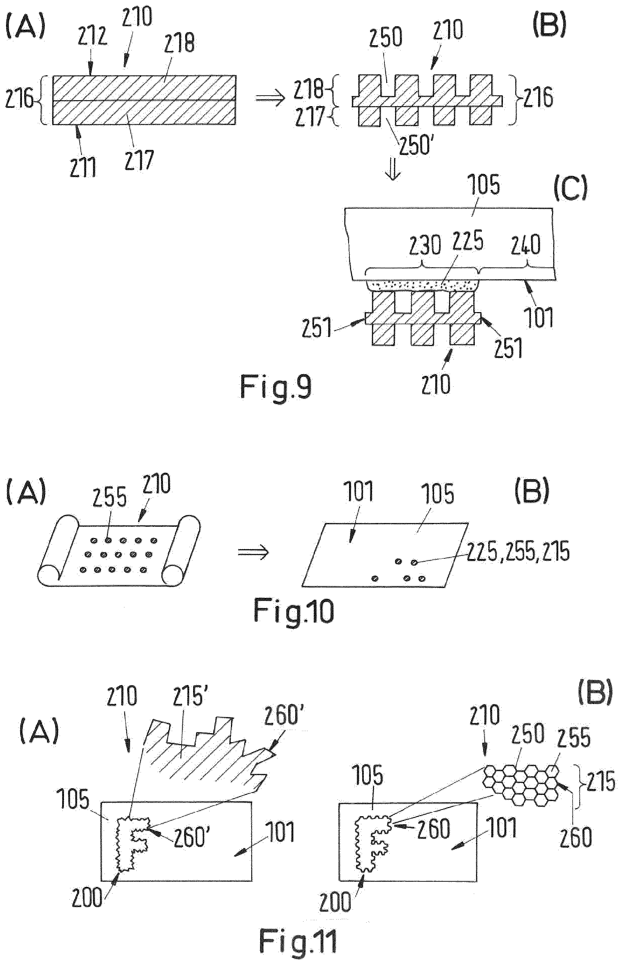

In einer dritten Ausführungsvariante wird ein Applikationselement 210, das keine Träger- und keine Trennlage aufweist, auf ein Substrat 105 übertragen und dabei erfindungsgemäß strukturiert (Fig. 9). Das Applikationselement ist in diesem Falle daher das Funktionselement 216. Die Dünnbereiche 250, 250' werden auch in diesem Falle erst nach der Herstellung des Applikationselements hergestellt. In diesem Falle handelt es sich wie zuvor um ein Oberflächenhologramm. Dieses Oberflächenhologramm weist eine Metallschicht 217 an der Vorderseite auf (Fig. 9A). Die Metallschicht sowie teilweise auch die Basisschicht 218 an der Rückseite 212 des Applikationselements werden jeweils mit in einer gerasterten Anordnung vorliegenden Dünnbereichen 250, 250' versehen. Das Raster kann wiederum die in Fig. 6 gezeigte Ausbildung aufweisen. Hierzu wird zum einen die Metallschicht, beispielsweise eine Aluminiumschicht, mit einem chemischen Ätzverfahren geätzt. Zum anderen wird von der Basisschicht partiell Material in den Dünnbereichen abgetragen, beispielsweise mit einem Polymerätzverfahren (Fig. 9B). Beispielsweise kann Polyimid mit einer alkalischen Lösung abgetragen werden. Hierzu wird eine Ätzmaske verwendet, die verhindert, dass Polymermaterial auch in den nicht abzutragenden Bereichen entfernt wird. Die Ätzmasken werden nach dem Erzeugen der Dünnbereiche wieder entfernt. Die Dünnbereiche beider Seiten liegen passergenau übereinander und bilden daher gemeinsam Reißlinien 251 entlang der wabenförmigen Struktur (Fig. 6). Nach dem In-Kontakt-Bringen des mit den Dünnbereichen versehenen Applikationselements 210 in den Adhäsionsbereichen 230 mit den Kleberstrukturen 225 auf dem Substrat 105 und Aushärten der Kleberstrukturen können die Teile des Applikationselements von der Substratoberfläche 101 wieder abgezogen werden, die keine haftfeste Verbindung mit dieser ausgebildet haben.

In einer vierten Ausführungsvariante der vorliegenden Erfindung wird ein Applikationselement 210 gebildet, das verdickte Bereiche 255 einer Polymerfolie und dazwischen liegende dünnere Bereiche in einem bestimmten Raster aufweist (Fig. 10). Das Material der verdickten Bereiche kann im Wesentlichen dasselbe sein wie das Material der Polymerfolie. Hierzu kann das Material für die verdickten Bereiche beispielsweise in Form eines Lackes auf die Polymerfolie aufgedruckt werden, beispielsweise mit einem Siebdruckverfahren. Die erhabenen Bereiche dienen dazu, auf einem Wert- und/oder Sicherheitsdokument Erhebungen für eine Blindenschrift, beispielsweise Braille-Schrift, zu bilden. Dazu entspricht der Rasterabstand der Erhebungen beispielsweise in dem für Brailleschrift üblichen Abstand der Punkte in dem Punktmuster der Braille-Schrift. Für eine wiederholte Auftragung von Punktmustern auf Dokumente kann ein derartige Erhebungen aufweisendes Band hergestellt werden (Fig. 10A).

Das Band wird mit den Erhebungen auf die Kleberstrukturen 225 auf der Oberfläche 101 des Substrats 105 aufgedrückt. Danach werden die Kleberstrukturen ausgehärtet. Die Kleberstrukturen sind entsprechend dem Punktmuster der Braille-Schrift für das jeweilige Braille-Schriftzeichen erzeugt, sodass beim Abziehen lediglich diejenigen Bereiche des Applikationselements 210 auf der Substratoberfläche haften bleiben, in denen sich die Klebestrukturen für das Punktmuster befinden. Eine Applikationselementstruktur 215 entspricht in diesem Falle genau einer Erhebung 255. Diese befindet sich in einem Adhäsionsbereich auf der Substratoberfläche. Das Material des Applikationselements zwischen den Erhebungen, d.h. in den Dünnbereichen, reißt relativ leicht, da die Polymerfolie selbst verhältnismäßig dünn sein kann. Da sich mit dem Applikationselement relativ dicke Punkterhebungen auf der Substratoberfläche bilden lassen, ist auf diese Weise eine Information in Form von Braille-Schrift auf der Substratoberfläche erzeugbar.

Zur Veranschaulichung der Erhöhung der Präzision der Ränder 260 von Applikationselementstrukturen 215 durch die Bildung von Dünnbereichen 250 und durch diese definierte Rasterzellen 255 in den Applikationselementen 210 sowie ferner zur Darstellung der unterschiedlichen Randstrukturen ist in Fig. 11 ein Vergleich von herkömmlich gebildeten Applikationselementstrukturen 215' (Fig. 11A) und von erfindungsgemäß gebildeten Applikationselementstrukturen 215 (Fig. 11B) gezeigt. Dies ist am Fall eines in Form des Buchstaben ,F` geformten Applikationselements für ein erfindungsgemäß hergestelltes Sicherheitsmerkmal 200 demonstriert. Für den Fall von wabenförmig verlaufenden Dünnbereichen wird eine sehr gleichmäßige Struktur des Randes 260 erhalten (Fig. 11B), während der Rand 260' der Struktur ohne Verwendung der Dünnbereiche nur grob nachgezeichnet ist (Fig. 11A). Außerdem weist die Randstruktur mit der erfindungsgemäßen Bildungsmethode eine gleichmäßige Randformung auf, die der wabenförmigen Struktur entspricht. Dagegen ist die nicht erfindungsgemäß erzeugte Randform unregelmäßig. Aus diesem Unterschied kann auf die erfindungsgemäße Pixelierung und bei genauerer Untersuchung auch auf die Art der Pixelierung geschlossen werden.

### Bezugszeichenliste:

- 100: Identitätskarte, Wert- und/oder Sicherheitsprodukt/-dokument
- 101: Vorderseite, Substratoberfläche
- 102: Passphoto
- 103: Datenfeld
- 104: Datenfeld
- 105: Substrat, Polycarbonatfolie
- 200: Sicherheitsmerkmal
- 210: Applikationselement, Funktionselement
- 210': Reste des Applikationselements/Funktionselements
- 211: Vorderseite, Oberseite des Bandes/Applikationselements
- 212: Rückseite des Bandes/Applikationselements
- 213: Trägerfolie, (Träger)Band
- 214: Trennlage
- 215: erfindungsgemäß gebildete Applikationselementstruktur
- 215': herkömmlich gebildete Applikationselementstruktur
- 216: Funktionselement
- 217: Metallschicht
- 218: Basisschicht
- 220: Haftvermittler, Klebermaterial, Kleber, Kleberauftrag
- 225: Kleberstruktur
- 230: Adhäsionsbereich
- 240: Freibereich
- 250, 250': Dünnbereich
- 251: geschwächte Stelle des Applikationselements, Reißlinie
- 255: Rasterzelle, Metallbereich, verdickter Bereich, Erhebung
- 260: erfindungsgemäß gebildeter Rand einer Applikationselementstruktur
- 260': herkömmlich gebildeter Rand einer Applikationselementstruktur
- 400: Druckwerk
- 410: Reservoir
- 420,430: Transferrolle
- 440: Auftragsrolle
- 500: Kaschierwerk
- 510: Anpressrolle
- 511: erste Gegendruckrolle
- 520: IR-Strahler
- 530: Abzugsrolle
- 531: zweite Gegendruckrolle
- 550: Belichtungsvorrichtung
- 551: UV-Laser
- 552: Spiegel
- 600: UV-Nachhärtevorrichtung
- A: Abzugsrichtung
- T: Transportrichtung

## Patentansprüche

1. Verfahren zum Herstellen eines Sicherheitsmerkmals (200) für ein Wert- und/oder Sicherheitsprodukt (100), umfassend folgende Verfahrensschritte:
(a) Bereitstellen eines Oberflächen (101) aufweisenden Substrats (105),
(b) Bereitstellen mindestens eines eine Vorderseite (211) und eine Rückseite (212) aufweisenden Applikationselements (210),
(c) Erzeugen jeweils einer Schicht eines Haftvermittlers (220) auf einer der Oberflächen (101) des Substrats (105) und/oder auf der Rückseite (212) des mindestens einen Applikationselements (210),
(d) Aufbringen des jeweiligen Applikationselements (210) mit seiner Rückseite (212) auf die mit der jeweiligen Schicht des Haftvermittlers (220) versehene Oberfläche (101) des Substrats (105) oder Aufbringen des jeweiligen Applikationselements (210) mit seiner den Haftvermittler (220) aufweisenden Rückseite (212) auf die Oberfläche (101) des Substrats (105),
(e) Unlösbares Verbinden des jeweiligen Applikationselements (210) mit der Oberfläche (101) des Substrats (105) ausschließlich in mindestens einem von mindestens einem Freibereich (240) begrenzten Adhäsionsbereich (230) und
(f) Mechanisches Entfernen von sich in dem mindestens einen Freibereich (240) befindenden und mit der Oberfläche (101) des Substrats (105) nicht unlösbar verbundenen Teilen des jeweiligen Applikationselements (210) von der Oberfläche (101) des Substrats (105), während sich in dem mindestens einen Adhäsionsbereich (230) befindende Teile des Applikationselements (210) mit der Oberfläche (101) des Substrats (105) unlösbar verbunden bleiben,
**dadurch gekennzeichnet, dass** das jeweilige Applikationselement (210) regelmäßig angeordnete Dünnbereiche (250) zur Schwächung der Reißfestigkeit des Materials des Applikationselements (210) in diesen Bereichen (250) aufweist, sodass sich die in dem mindestens einen Freibereich (240) befindenden Teile des jeweiligen Applikationselements (210) beim mechanischen Entfernen von der Oberfläche (101) des Substrats (105) entlang den Dünnbereichen (250) von den sich in dem mindestens einen Adhäsionsbereich (230) befindenden Teilen des jeweiligen Applikationselements (210) trennen.

2. Verfahren zum Herstellen eines Sicherheitsmerkmals (200) für ein Wert- und/oder Sicherheitsprodukt (100) nach Anspruch 1, **dadurch gekennzeichnet, dass** die Dünnbereiche (250) beim Herstellen des jeweiligen Applikationselements (210) durch Materialaufbau in Bereichen außerhalb der Dünnbereiche und/oder nach dem Herstellen des jeweiligen Applikationselements (210) durch Materialentfernung oder Materialumformung erzeugt werden.

3. Verfahren zum Herstellen eines Sicherheitsmerkmals (200) für ein Wert- und/oder Sicherheitsprodukt (100) nach einem der vorstehenden Ansprüche, **dadurch gekennzeichnet, dass** die Dünnbereiche (250) durch Materialumformung mit einem Prägeverfahren und/oder durch Materialabtrag mit einem chemischen Ätzverfahren oder mit einem Corona-Ätzverfahren erzeugt werden.

4. Verfahren zum Herstellen eines Sicherheitsmerkmals (200) für ein Wert- und/oder Sicherheitsprodukt (100) nach einem der vorstehenden Ansprüche, **dadurch gekennzeichnet, dass** die Dünnbereiche (250) mittels eines Druckverfahrens durch lokal verminderten Materialauftrag in Bereichen (255) außerhalb der Dünnbereiche (250) erzeugt werden.

5. Verfahren zum Herstellen eines Sicherheitsmerkmals (200) für ein Wert- und/oder Sicherheitsprodukt (100) nach einem der vorstehenden Ansprüche, **dadurch gekennzeichnet, dass** die sich in dem mindestens einen Adhäsionsbereich (230) befindenden Teile des jeweiligen Applikationselements (210) in Form einer Kennzeichnung angeordnet sind.

6. Verfahren zum Herstellen eines Sicherheitsmerkmals (200) für ein Wert- und/oder Sicherheitsprodukt (100) nach Anspruch 5, **dadurch gekennzeichnet, dass** die Kennzeichnung individualisierend ist.

7. Verfahren zum Herstellen eines Sicherheitsmerkmals (200) für ein Wert- und/oder Sicherheitsprodukt (100) nach einem der vorstehenden Ansprüche, **dadurch gekennzeichnet, dass** die jeweilige Schicht des Haftvermittlers (220) ausschließlich in dem mindestens einen Adhäsionsbereich (230) auf der Oberfläche (101) des Substrats (105) oder auf der Rückseite (212) des jeweiligen Applikationselements (210) erzeugt wird, nicht aber in dem mindestens einen Freibereich (240), und dass das jeweilige Applikationselement (210) durch Aushärten des Haftvermittlers (220) mit der Oberfläche (101) des Substrats (105) unlösbar verbunden wird.

8. Verfahren zum Herstellen eines Sicherheitsmerkmals (200) für ein Wert- und/oder Sicherheitsprodukt (100) nach Anspruch 7, **dadurch gekennzeichnet, dass** die jeweilige Schicht des Haftvermittlers (220) mittels eines digitalen Druckverfahrens erzeugt wird.

9. Verfahren zum Herstellen eines Sicherheitsmerkmals (200) für ein Wert- und/oder Sicherheitsprodukt (100) nach Anspruch 8, **dadurch gekennzeichnet, dass** das digitale Druckverfahren ein Tintenstrahldruckverfahren ist.

10. Verfahren zum Herstellen eines Sicherheitsmerkmals (200) für ein Wert- und/oder Sicherheitsprodukt (100) nach einem der vorstehenden Ansprüche, **dadurch gekennzeichnet, dass** das jeweilige Applikationselement (210) mit der Oberfläche (101) des Substrats (105) unlösbar verbunden wird, indem der Haftvermittler (220) mittels elektromagnetischer Strahlung aushärtbar ist und mittels der elektromagnetischen Strahlung ausschließlich in dem mindestens einen Adhäsionsbereich (230) ausgehärtet wird, nicht dagegen in dem mindestens einen Freibereich (240).

11. Verfahren zum Herstellen eines Sicherheitsmerkmals (200) für ein Wert- und/oder Sicherheitsprodukt (100) nach Anspruch 10, **dadurch gekennzeichnet, dass** die elektromagnetische Strahlung UV-Strahlung ist.

12. Verfahren zum Herstellen eines Sicherheitsmerkmals (200) für ein Wert- und/oder Sicherheitsprodukt (100) nach einem der vorstehenden Ansprüche, **dadurch gekennzeichnet, dass** das mindestens eine Applikationselement (210) ein Sicherheitselement ist, das ein lichtbeugendes und/oder lichtbrechendes und/oder lichtreflektierendes und/oder lichtabsorbierendes und/oder lichtemittierendes und/oder elektrisch leitfähiges und/oder magnetisierbares Element ist.

13. Wert- und/oder Sicherheitsprodukt (100), aufweisend:
(a) ein Oberflächen (101) aufweisendes Substrat (105) und
(b) mindestens ein Sicherheitsmerkmal (200) an einer der Oberflächen (101) des Substrats (105), wobei das Sicherheitsmerkmal (200) durch jeweils ein Applikationselement (210) gebildet ist, wobei mindestens ein Teil des jeweiligen Applikationselements (210) ausschließlich in mindestens einem an mindestens einen Freibereich (240) angrenzenden Adhäsionsbereich (230) mittels eines Haftvermittlers (220) mit der Oberfläche (101) des Substrats (105) unlösbar verbunden ist und sich in dem mindestens einen Freibereich (240) kein Teil des jeweiligen Applikationselements (210) befindet,
**dadurch gekennzeichnet, dass** sich der mindestens eine in dem mindestens einen Adhäsionsbereich (230) befindende Teil des jeweiligen Applikationselements (210) regelmäßig geformt verlaufende Ränder (260) aufweist, die entlang von die Reißfestigkeit des Materials des Applikationselements (210) schwächenden Dünnbereichen (250) in dem Material verlaufen.

14. Wert- und/oder Sicherheitsprodukt (100) nach Anspruch 13, **dadurch gekennzeichnet, dass** die sich in dem mindestens einen Adhäsionsbereich (230) befindenden Teile des jeweiligen Applikationselements (210) Erhebungen (255) in Form einer Blindenschrift auf der mindestens einen Oberfläche (101) des Substrats (105) bilden.

## Claims

1. Method for producing a security feature (200) for a value product and/or a security product (100), comprising the following method steps:
(a) Providing a substrate (105) having surfaces (101),
(b) providing at least one application element (210) having a front side (211) and a reverse side (212),
(c) generating a respective coating of an adhesive agent (220) on one of the surfaces (101) of the substrate (105) and/or on the reverse side (212) of the at least one application element (210),
(d) applying the respective application element (210) with its reverse side (212) onto the surface (101) of the substrate (105) provided with the respective coating of adhesive agent (220), or the application of the respective application element (210) with its reverse side (212), provided with the adhesive (220), onto the surface (101) of the substrate (105),
(e) inseparable bonding of the respective application element (210) with the surface (101) of the substrate (105) exclusively in at least one adhesion region (230) bounded by at least one free region (240), and
(f) mechanical removal of parts of the respective application element (210), present in the free region (240) and not inseparably bonded to the surface (101) of the substrate (105), from the surface (101) of the substrate (105), while parts of the application element (210) located in the at least one adhesion region (230) remain inseparably bonded to the surface (101) of the substrate (105),
**characterised in that** the respective application element (210) comprises regularly arranged thin regions (250) for weakening the tear resistance of the material of the application element (210) in these regions (250), such that the parts of the respective application element (210) located in the at least one free region (240), on the mechanical removal from the surface (101) of the substrate (105), separate along the thin regions (250) from the parts of the respective application element (210) located in the at least one adhesion region (230).

2. Method for producing a security feature (200) for a value product and/or a security product (100) according to claim 1, **characterised in that** the thin regions (250), at the production of the respective application element (210), are produced by building up material in regions outside the thin regions and/or, after the production of the respective application element (210), by the removal of material or by material forming.

3. Method for producing a security feature (200) for a value product and/or a security product (100) according to any one of the preceding claims, **characterised in that** the thin regions (250) are produced by material forming with an embossing process and/or by material removal by a chemical etching process or by a Corona etching process.

4. Method for producing a security feature (200) for a value product and/or a security product (100) according to any one of the preceding claims, **characterised in that** the thin regions (250) are produced by means of a printing process by locally reduced material application in regions (255) outside the thin regions (250).

5. Method for producing a security feature (200) for a value product and/or a security product (100) according to any one of the preceding claims, **characterised in that** the parts of the respective application element (210) which are located in the at least one adhesion region (230) are arranged in the form of an identification element.

6. Method for producing a security feature (200) for a value product and/or a security product (100) according to claim 5, **characterised in that** the identification element is individualised.

7. Method for producing a security feature (200) for a value product and/or a security product (100) according to any one of the preceding claims, **characterised in that** the respective layer of adhesive agent (220) is produced exclusively in the at least one adhesion region (230) on the surface (101) of the substrate (105) or the reverse side (212) of the respective application element (210), but not in the at least one free region (240), and that, by the hardening of the adhesive agent (220), the respective application element (210) is inseparably bonded to the surface (101) of the substrate (105).

8. Method for producing a security feature (200) for a value product and/or a security product (100) according to claim 7, **characterised in that** the respective layer of the adhesive agent (220) is produced by means of a digital printing process.

9. Method for producing a security feature (200) for a value product and/or a security product (100) according to claim 8, **characterised in that** the digital printing process is an ink-jet printing process.

10. Method for producing a security feature (200) for a value product and/or a security product (100) according to any one of the preceding claims, **characterised in that** the respective application element (210) is inseparably bonded to the surface (101) of the substrate (105), **in that** the adhesive agent (220) can be hardened by means of electromagnetic radiation, and, by means of the electromagnetic radiation, is hardened exclusively in the at least one adhesion region (230), but by contrast not in the at least one free region (240).

11. Method for producing a security feature (200) for a value product and/or a security product (100) according to claim 10, **characterised in that** the electromagnetic radiation is UV radiation.

12. Method for producing a security feature (200) for a value product and/or a security product (100) according to any one of the preceding claims, **characterised in that** the at least one application element (210) is a security element, which is a light diffracting and/or light refracting and/or light reflecting and/or light absorbing and/or light emitting and/or electrically conductive and/or magnetisable element.

13. Value product and/or security product (100), comprising:
(a) A substrate (105) comprising surfaces (101), and
(b) at least one security feature (200) on one of the surfaces (101) of the substrate (105), wherein the security feature (200) is formed in each case by an application element (210), wherein at least one part of the respective application element (210) is inseparably bonded exclusively in at least one adhesion region (230) bounding on at least one free region (240), by means of an adhesive agent (220), to the surface (101) of the substrate (105), and no part of the respective application element (210) is located in the at least one free region (240),
**characterised in that** the at least one part of the respective application element (210) located in the at least one adhesion region (230) comprises regularly formed edges (260), which run along thin regions (250) in the material, which weaken the tear resistance of the material of the application element (210).

14. Value product and/or security product (100) according to claim 13, **characterised in that** the parts of the respective application element (210) located in the at least one adhesion region (230) form elevations (255) in the form of a script for the blind on the at least one surface (101) of the substrate (105).

## Revendications

1. Procédé de fabrication d'une caractéristique de sécurité (200) pour un produit de valeur et/ou un produit de sécurité (100), comprenant les étapes de procédé suivantes :
(a) mise à disposition d'un substrat (105) présentant des surfaces (101),
(b) mise à disposition d'au moins un élément d'application (210) présentant une face avant (211) et une face arrière (212),
(c) génération de respectivement une couche d'un agent adhésif (220) sur une des surfaces (101) du substrat (105) et/ou sur la face arrière (212) de l'au moins un élément d'application (210),
(d) application de l'élément d'application respectif (210) avec sa face arrière (212) sur la surface (101) du substrat (105) dotée de la couche respective de l'agent adhésif (220) ou application de l'élément d'application respectif (210) avec sa face arrière (212) présentant l'agent adhésif (220) sur la surface (101) du substrat (105),
(e) liaison inamovible de l'élément d'application respectif (210) avec la surface (101) du substrat (105) exclusivement dans au moins une zone d'adhérence (230) limitée par au moins une zone libre (240) et
(f) retrait mécanique de parties de l'élément d'application respectif (210) de la surface (101) du substrat (105) reliées de manière non inamovible avec la surface (101) du substrat (105) et se trouvant dans l'au moins une zone libre (240), pendant que des parties de l'élément d'application (210) se trouvant dans l'au moins une zone d'adhérence (230) sont reliées de manière inamovible avec la surface (101) du substrat (105),
**caractérisé en ce que** l'élément d'application respectif (210) présente des zones minces (250) agencées de manière régulière pour altérer la résistance au déchirement du matériau de l'élément d'application (210) dans ces zones (250), si bien que les parties de l'élément d'application respectif (210) se trouvant dans l'au moins une zone libre (240) se séparent lors du retrait mécanique de la surface (101) du substrat (105) le long des zones minces (250) des parties de l'élément d'application respectif (210) se trouvant dans l'au moins une zone d'adhérence (230).

2. Procédé de fabrication d'une caractéristique de sécurité (200) pour un produit de valeur et/ou un produit de sécurité (100) selon la revendication 1, **caractérisé en ce que** les zones minces (250) sont générées lors de la fabrication de l'élément d'application respectif (210) par l'assemblage de matériau dans des zones en dehors des zones minces et/ou après la fabrication de l'élément d'application respectif (210) par retrait de matériau ou déformation de matériau.

3. Procédé de fabrication d'une caractéristique de sécurité (200) pour un produit de valeur et/ou un produit de sécurité (100) selon l'une quelconque des revendications précédentes, **caractérisé en ce que** les zones minces (250) sont générées par déformation de matériau avec un procédé d'estampage et/ou par enlèvement de matériau avec un procédé d'attaque chimique ou avec un procédé d'attaque corona.

4. Procédé de fabrication d'une caractéristique de sécurité (200) pour un produit de valeur et/ou un produit de sécurité (100) selon l'une quelconque des revendications précédentes, **caractérisé en ce que** les zones minces (250) sont générées au moyen d'un procédé d'impression par application de matériau localement réduite dans des zones (255) en dehors des zones minces (250).

5. Procédé de fabrication d'une caractéristique de sécurité (200) pour un produit de valeur et/ou un produit de sécurité (100) selon l'une quelconque des revendications précédentes, **caractérisé en ce que** les parties de l'élément d'application respectif (210) se trouvant dans l'au moins une zone d'adhérence (230) sont agencées sous la forme d'un marquage.

6. Procédé de fabrication d'une caractéristique de sécurité (200) pour un produit de valeur et/ou un produit de sécurité (100) selon la revendication 5, **caractérisé en ce que** le marquage est individualisant.

7. Procédé de fabrication d'une caractéristique de sécurité (200) pour un produit de valeur et/ou un produit de sécurité (100) selon l'une quelconque des revendications précédentes, **caractérisé en ce que** la couche respective de l'agent adhésif (220) est générée exclusivement dans l'au moins une zone d'adhérence (230) sur la surface (101) du substrat (105) ou sur la face arrière (212) de l'élément d'application respectif (210), mais pas dans l'au moins une zone libre (240), et **en ce que** l'élément d'application respectif (210) est relié de manière inamovible à la surface (101) du substrat (105) par durcissement de l'agent adhésif (220).

8. Procédé de fabrication d'une caractéristique de sécurité (200) pour un produit de valeur et/ou un produit de sécurité (100) selon la revendication 7, **caractérisé en ce que** la couche respective de l'agent adhésif (220) est générée au moyen d'un procédé d'impression numérique.

9. Procédé de fabrication d'une caractéristique de sécurité (200) pour un produit de valeur et/ou un produit de sécurité (100) selon la revendication 8, **caractérisé en ce que** le procédé d'impression numérique est un procédé d'impression à jet d'encre.

10. Procédé de fabrication d'une caractéristique de sécurité (200) pour un produit de valeur et/ou un produit de sécurité (100) selon l'une quelconque des revendications précédentes, **caractérisé en ce que** l'élément d'application respectif (210) est relié de manière inamovible à la surface (101) du substrat (105), par le fait que l'agent adhésif (220) est durcissable par rayonnement électromagnétique et est durci par rayonnement électromagnétique exclusivement dans l'au moins une zone d'adhérence (230), mais pas dans l'au moins une zone libre (240).

11. Procédé de fabrication d'une caractéristique de sécurité (200) pour un produit de valeur et/ou un produit de sécurité (100) selon la revendication 10, **caractérisé en ce que** le rayonnement électromagnétique est un rayonnement UV.

12. Procédé de fabrication d'une caractéristique de sécurité (200) pour un produit de valeur et/ou un produit de sécurité (100) selon l'une quelconque des revendications précédentes, **caractérisé en ce que** l'au moins un élément d'application (210) est un élément de sécurité, qui est un élément diffractif et/ou réfractif et/ou réfléchissant et/ou absorbant la lumière et/ou émettant la lumière et/ou électriquement conducteur et/ou magnétisable.

13. Produit de valeur et/ou de sécurité (100), présentant :
(a) un substrat (105) présentant des surfaces (101), et
(b) au moins une caractéristique de sécurité (200) sur une des surfaces (101) du substrat (105), dans lequel la caractéristique de sécurité (200) est formée par respectivement un élément d'application (210), dans lequel au moins une partie de l'élément d'application respectif (210) est reliée de manière inamovible à la surface (101) du substrat (105) exclusivement dans au moins une zone d'adhérence (230) adjacente à au moins une zone libre (240) au moyen d'un agent adhésif (220) et aucune partie de l'élément d'application respectif (210) ne se trouve dans l'au moins une zone libre (240),
**caractérisé en ce que** l'au moins une partie de l'élément d'application respectif (210) se trouvant dans l'au moins une zone d'adhérence (230) présente des bords (260) s'étendant formés de manière régulière, qui s'étendent dans le matériau le long de zones minces (250) altérant la résistance au déchirement du matériau de l'élément d'application (210).

14. Produit de valeur et/ou de sécurité (100) selon la revendication 13, **caractérisé en ce que** les parties de l'élément d'application respectif (210) se trouvant dans l'au moins une zone d'adhérence (230) forment des élévations (255) sous la forme d'une écriture braille sur l'au moins une surface (101) du substrat (105).
